(19) Europäisches Patentamt / European Patent Office / Office européen des brevets

(11) **EP 3 198 234 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(21) Anmeldenummer: **15766521.7**

(22) Anmeldetag: **22.09.2015**

(51) Int Cl.:
**G01D 5/22** (2006.01)    **G01D 5/20** (2006.01)

(86) Internationale Anmeldenummer:
**PCT/EP2015/071701**

(87) Internationale Veröffentlichungsnummer:
**WO 2016/046191 (31.03.2016 Gazette 2016/13)**

(54) **INDUKTIVER POSITIONSSENSOR MIT FREQUENZUMSETZER UND GOERTZELFILTER ZUR SIGNALAUSWERTUNG**

INDUCTIVE POSITION SENSOR WITH FREQUENCY CONVERTER AND GOERTZEL FILTER FOR ANALYZING SIGNALS

CAPTEUR DE POSITION INDUCTIF MUNI D'UN CONVERTISSEUR DE FRÉQUENCE ET D'UN FILTRE DE GOERTZEL POUR L'ÉVALUATION DE SIGNAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2014 DE 102014219092**

(43) Veröffentlichungstag der Anmeldung:
**02.08.2017 Patentblatt 2017/31**

(73) Patentinhaber: **Continental Teves AG & Co. OHG 60488 Frankfurt am Main (DE)**

(72) Erfinder:
• LEHMANN, Sören
 65934 Frankfurt (DE)
• SCHIRLING, Andreas
 64285 Darmstadt (DE)

(56) Entgegenhaltungen:
**EP-A2- 2 552 070      DE-A1-102012 215 940
US-A- 5 818 296**

• **Christoph Rauscher ET AL: "Grundlagen der Spektrumanalyse", , 2000, Seiten 1-112, XP055234566, Mühldorfstr 15, 81671 München, Germany Gefunden im Internet: URL:http://www.heuermann.fh-aachen.de/files/download/diverse/Spektrumanalyse.pdf [gefunden am 2015-12-08]**
• **HADERER A ET AL: "A fixed IF 77-GHz FMCW radar sensor", MICROWAVE CONFERENCE, 2008. APMC 2008. ASIA-PACIFIC, IEEE, PISCATAWAY, NJ, USA, 16. Dezember 2008 (2008-12-16), Seiten 1-4, XP031636803, ISBN: 978-1-4244-2641-6**

**Beschreibung**

Die vorliegende Erfindung betrifft einen Positionssensor.

Ein Kraftfahrzeug umfasst häufig eine Vielzahl von bewegbaren Objekten, deren Position mittels Positionssensoren erfasst wird. Einen solchen Sensor zeigt beispielsweise die DE 10 2012 215 940 A1.

Zum Erfassen der Position eines bewegbaren Objekts wird häufig ein Positionsgeber, wie ein passiver Schwingkreis oder ein Metallelement, an dem bewegbaren Objekt angeordnet. Zur Erfassung der Position des Positionsgebers wird häufig ein Differentialtransformator mit einer Primärspule und zwei Sekundärspulen verwendet, wobei die Primärspule und die Sekundärspulen über den Positionssensor magnetisch koppelbar sind.

Hierbei kann die Primärspule mit einem Trägersignal angeregt werden, um elektrische Signale in den Sekundärspulen zu induzieren. Die induzierten elektrischen Signale können zur Bestimmung der Position des Positionsgebers ausgewertet werden, beispielsweise mittels eines Prozessors oder eines Mikrokontrollers. Hierzu wird häufig aufwändig das Trägersignal regeneriert.

Es ist die der Erfindung zugrundeliegende Aufgabe, einen effizienteren Positionssensor anzugeben.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Positionssensor zum Erfassen einer Position eines Positionsgebers gelöst, wobei der Positionssensor mit einer ersten elektrischen Signalquelle zum Ausgeben eines ersten elektrischen Signals mit einer ersten Frequenz und einer zweiten elektrischen Signalquelle zum Ausgeben eines zweiten elektrischen Signals mit einer zweiten Frequenz verbunden ist, mit: einem Frequenzgenerator zum Erzeugen eines weiteren elektrischen Signals mit einer dritten Frequenz, wobei die erste elektrische Signalquelle ausgebildet ist, das erste elektrische Signal auf der Basis des weiteren elektrischen Signals zu erzeugen, und wobei die zweite elektrische Signalquelle ausgebildet ist, das zweite elektrische Signal auf der Basis des weiteren elektrischen Signals zu erzeugen, wobei der Frequenzgenerator einen Mutteroszillator eines Mikrokontrollers umfasst, einer Primärspule zum Erzeugen eines magnetischen Wechselfeldes mit der ersten Frequenz; einer ersten Sekundärspule und einer zweiten Sekundärspule, wobei die erste Sekundärspule und die zweite Sekundärspule jeweils durch den Positionsgeber mit der Primärspule magnetisch koppelbar sind, und wobei durch das erzeugte magnetische Wechselfeld ein drittes elektrisches Signal in der ersten Sekundärspule und ein viertes elektrisches Signal in der zweiten Sekundärspule induzierbar ist; einem Frequenzumsetzer zum Umsetzen des dritten elektrischen Signals auf ein erstes Zwischenfrequenzsignal und zum Umsetzen des vierten elektrischen Signals auf ein zweites Zwischenfrequenzsignal, wobei der Frequenzumsetzer mit der zweiten elektrischen Signalquelle verbindbar ist; und einer Goertzelfilterbank zur Demodulation des ersten Zwischenfrequenzsignals, um ein erstes demoduliertes Signal zu erhalten, und zur Demodulation des zweiten Zwischenfrequenzsignals, um ein zweites demoduliertes Signal zu erhalten. Dadurch wird der Vorteil erreicht, dass eine aufwändige Regenerierung des ersten elektrischen Signals entfallen kann. Der Positionsgeber kann einen passiven Schwingkreis und/oder ein Metallelement, wie ein Metalltarget, umfassen oder durch einen passiven Schwingkreis und/oder ein Metallelement, wie ein Metalltarget, gebildet sein. Die erste elektrische Signalquelle und die zweite elektrische Signalquelle sind mit einem Mutteroszillator, mittels welchem ein Referenzsignal erzeugbar ist, verbunden.

Die jeweilige Frequenz kann vorbestimmt oder mittels eines Betätigungselementes, wie eines Tasters, eines Drehknopfes oder eines Dual In-Line Package (DIP) Schaltelements, der jeweiligen elektrischen Signalquelle einstellbar sein. Beispielsweise beträgt die jeweilige Frequenz 100kHz, 250kHz, 500kHz, 750kHz, 1MHz, 2,5MHz, 5MHz, 7,5MHz, 10MHz, 25MHz, 50MHz, 75MHz, 100MHz, 250MHz, 500MHz, 750MHz oder 1GHz. Gemäß einer Ausführungsform kann die zweite Frequenz kleiner oder größer als die erste Frequenz sein.

Die Primärspule und die jeweiligen Sekundärspulen können einen Differentialtransformator bilden oder in einem Differentialtransformator umfasst sein.

Der Frequenzumsetzer kann einen Mischer zum Umsetzen des dritten elektrischen Signals und/oder des vierten elektrischen Signals in einen niedrigeren Zwischenfrequenzbereich umfassen. Ferner kann die Goertzelfilterbank ein Filterelement, wie einen Goertzelfilter, zur Demodulation des ersten Zwischenfrequenzsignals und/oder des zweiten elektrischen Zwischenfrequenzsignals nach dem Goertzel-Algorithmus umfassen.

In einer vorteilhaften Ausführungsform ist der Positionssensor ausgebildet mit einem Prozessor zum Bestimmen der Position des Positionsgebers in Abhängigkeit von dem ersten demodulierten Signal oder von dem zweiten demodulierten Signal. Dadurch wird der Vorteil erreicht, dass die Position des Positionsgebers effizient erfasst werden kann.

In einer weiteren vorteilhaften Ausführungsform ist der Goertzelfilterbank ein Analog-Digital-Umsetzer vorgeschaltet. Dadurch wird der Vorteil erreicht, dass die Goertzelfilterbank durch einen kostengünstigen Mikroprozessor zur digitalen Signalverarbeitung gebildet werden kann.

In einer weiteren vorteilhaften Ausführungsform ist der Goertzelfilterbank eine Einrichtung zur Signalfensterung vorgeschaltet. Dadurch wird der Vorteil erreicht, dass eine Genauigkeit der Erfassung der Position des Positionsgebers erhöht werden kann.

Die Einrichtung zur Signalfensterung kann zum Anwenden einer Fensterfunktion auf das erste Zwischenfrequenzsignal und/oder das zweite Zwischenfrequenzsignal ausgebildet sein. Beispielsweise ist die Fensterfunktion eine Rechteck-Fensterfunktion, eine Hamming-Fensterfunktion, eine Hanning-Fensterfunktion, eine Von-Hann-Fensterfunktion, eine Blackman-Fensterfunktion, eine Bartlett-Fensterfunktion, eine Kosinus-Fensterfunktion, eine Tukey-Fensterfunktion, eine Lanczos-Fensterfunktion, eine Kaiser-Fensterfunktion oder eine Gauß-Fensterfunktion.

In einer weiteren vorteilhaften Ausführungsform umfasst die Goertzelfilterbank einen ersten Goertzelfilter zur Demodulation des ersten Zwischenfrequenzsignals und einen zweiten Goertzelfilter zur Demodulation des zweiten Zwischenfrequenzsignals. Dadurch wird der Vorteil erreicht, dass das jeweilige Zwischenfrequenzsignal effizient demoduliert werden kann.

In einer weiteren vorteilhaften Ausführungsform ist der Positionssensor ausgebildet mit einem Signalausgang zur Ausgabe des ersten demodulierten Signals oder des zweiten demodulierten Signals. Dadurch wird der Vorteil erreicht, dass das jeweilige demodulierte Signal an einen externen Prozessor zur Bestimmung der Position des Positionsgebers weitergeleitet werden kann. In einer weiteren vorteilhaften Ausführungsform ist der Goertzelfilterbank eine Einrichtung zur Linearisierung des ersten demodulierten Signals oder des zweiten demodulierten Signals nachgeschaltet. Dadurch wird der Vorteil erreicht, dass das jeweilige demodulierte Signal effizient weiterverarbeitet werden kann.

In einer weiteren vorteilhaften Ausführungsform ist dem Frequenzumsetzer ein Bandpassfilter nachgeschaltet. Dadurch wird der Vorteil erreicht, dass das jeweilige Zwischenfrequenzsignal effizient aus dem Ausgangssignal des Frequenzumsetzers herausgefiltert werden kann.

In einer weiteren vorteilhaften Ausführungsform ist dem Frequenzumsetzer ein Verstärker nachgeschaltet. Dadurch wird der Vorteil erreicht, dass eine Pegelanpassung des jeweiligen Zwischenfrequenzsignals durchgeführt werden kann.

In einer weiteren vorteilhaften Ausführungsform umfasst der Frequenzumsetzer einen ersten Mischer zum Mischen des dritten elektrischen Signals mit dem zweiten elektrischen Signal und einen zweiten Mischer zum Mischen des vierten elektrischen Signals mit dem zweiten elektrischen Signal. Dadurch wird der Vorteil erreicht, dass das jeweilige Zwischenfrequenzsignal effizient erzeugt werden kann.

Der Positionssensor ist ausgebildet mit der ersten elektrischen Signalquelle und der zweiten elektrischen Signalquelle. Dadurch wird der Vorteil erreicht, dass eine Montage des Positionssensors vereinfacht werden kann.

In einer weiteren vorteilhaften Ausführungsform ist der ersten elektrischen Signalquelle oder der zweiten elektrischen Signalquelle ein Verstärker nachgeschaltet. Dadurch wird der Vorteil erreicht, dass eine Pegelanpassung des ersten elektrischen Signals oder des zweiten elektrischen Signals durchgeführt werden kann.

Der Positionssensor ist ausgebildet mit einem Frequenzgenerator zum Erzeugen eines weiteren elektrischen Signals mit einer dritten Frequenz, wobei die erste elektrische Signalquelle ausgebildet ist, das erste elektrische Signal auf der Basis des weiteren elektrischen Signals zu erzeugen, und wobei die zweite elektrische Signalquelle ausgebildet ist, das zweite elektrische Signal auf der Basis des weiteren elektrischen Signals zu erzeugen. Dadurch wird der Vorteil erreicht, dass ein Muttersignal zur Erzeugung des ersten elektrischen Signals und des zweiten elektrischen Signals bereitgestellt werden kann. Der Frequenzgenerator umfasst einen Mutteroszillator und die dritte Frequenz : beträgt beispielsweise 100kHz, 250kHz, 500kHz, 750kHz, 1MHz, 2,5MHz, 5MHz, 7,5MHz, 10MHz, 25MHz, 50MHz, 75MHz, 100MHz, 250MHz, 500MHz, 750MHz oder 1GHz.

In einer weiteren vorteilhaften Ausführungsform ist die erste Frequenz oder die zweite Frequenz ein ganzzahliges Vielfaches der dritten Frequenz, oder ist die dritte Frequenz ein ganzzahliges Vielfaches der ersten Frequenz oder der zweiten Frequenz. Dadurch wird der Vorteil erreicht, dass das erste elektrische Signal oder das zweite elektrische Signal effizient durch Frequenzvervielfältigung oder durch Frequenzteilung erzeugt werden kann.

In einer weiteren vorteilhaften Ausführungsform umfasst die erste elektrische Signalquelle einen Synthesizer zum Erzeugen des ersten elektrischen Signals mit der ersten Frequenz auf der Basis des weiteren elektrischen Signals, oder umfasst die zweite elektrische Signalquelle einen Synthesizer zum Erzeugen des zweiten elektrischen Signals mit der zweiten Frequenz auf der Basis des weiteren elektrischen Signals . Dadurch wird der Vorteil erreicht, dass das erste elektrische Signal oder das zweite elektrische Signal effizient erzeugt werden kann.

Ausführungsbeispiele der Erfindung sind in den Zeichnungen dargestellt und werden im Folgenden näher beschrieben.

Es zeigen:

Fig. 1 eine schematische Darstellung eines Positionssensors gemäß einer Ausführungsform;

Fig. 2 eine spektrale qualitative Darstellung eines Umsetzprozesses einer Synchrondemodulation durch phasenrichtige Multiplikation der Zweiseitenband-AM mit Träger und einem zugesetzten Träger gleicher Frequenz und Phasenlage;

Fig. 3 ein Funktionsprinzip des Frequenzumsetzers;

Fig. 4 eine Anordnung mit einer Platine und einem Positionsgeber;

Fig. 5 eine schematische Darstellung des Positionssensors gemäß einer weiteren Ausführungsform;

Fig. 6 eine spektrale qualitative Darstellung einer Frequenzumsetzung von einem Hochfrequenzbereich in einen Zwischenfrequenzbereich;

Fig. 7 eine schematische Darstellung des Synthesizers gemäß einer Ausführungsform;

Fig. 8 eine schematische Darstellung des Synthesizers gemäß einer weiteren Ausführungsform;

Fig. 9 eine spektrale qualitative Darstellung einer zweistufigen Frequenzumsetzung von einem Hochfrequenzbereich in einen Zwischenfrequenzbereich; und

Fig. 10 eine schematische Darstellung des Positionssensors gemäß einer weiteren Ausführungsform.

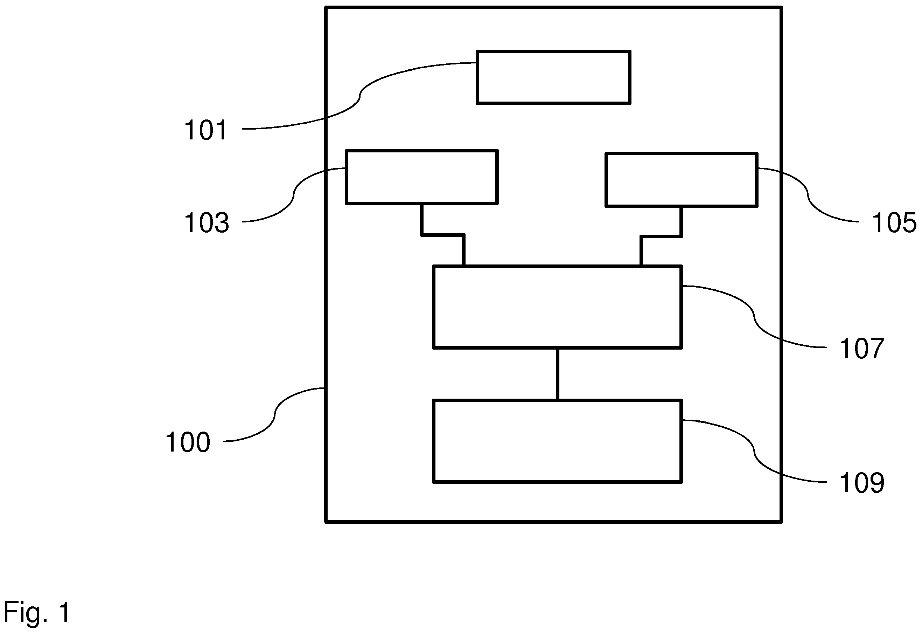

Fig. 1 zeigt eine schematische Darstellung eines Positionssensors 100 gemäß einer Ausführungsform. Der Positionssensor 100 umfasst eine Primarspule 101, eine erste Sekundärspule 103, eine zweite Sekundärspule 105, einen Frequenzumsetzer 107 und eine Goertzelfilterbank 109.

Der Positionssensor 100 zum Erfassen einer Position eines Positionsgebers, wobei der Positionssensor 100 mit einer ersten elektrischen Signalquelle zum Ausgeben eines ersten elektrischen Signals mit einer ersten Frequenz und einer zweiten elektrischen Signalquelle zum Ausgeben eines zweiten elektrischen Signals mit einer zweiten Frequenz verbunden ist, kann ausgebildet sein mit: der Primärspule 101 zum Erzeugen eines magnetischen Wechselfeldes mit der ersten Frequenz; der ersten Sekundärspule 103 und der zweiten Sekundärspule 105, wobei die erste Sekundärspule 103 und die zweite Sekundärspule 105 jeweils durch den Positionsgeber mit der Primärspule 101 magnetisch koppelbar sind, und wobei durch das erzeugte magnetische Wechselfeld ein drittes elektrisches Signal in der ersten Sekundärspule 103 und ein viertes elektrisches Signal in der zweiten Sekundärspule 105 induzierbar ist; dem Frequenzumsetzer 107 zum Umsetzen des dritten elektrischen Signals auf ein erstes Zwischenfrequenzsignal und zum Umsetzen des vierten elektrischen Signals auf ein zweites Zwischenfrequenzsignal, wobei der Frequenzumsetzer 107 mit der zweiten elektrischen Signalquelle verbindbar ist; und der Goertzelfilterbank 109 zur Demodulation des ersten Zwischenfrequenzsignals, um ein erstes demoduliertes Signal zu erhalten, und zur Demodulation des zweiten Zwischenfrequenzsignals, um ein zweites demoduliertes Signal zu erhalten.

Der Positionsgeber kann einen passiven Schwingkreis und/oder ein Metallelement, wie ein Metalltarget, umfassen oder durch einen passiven Schwingkreis und/oder ein Metallelement, wie ein Metalltarget, gebildet sein. Die erste elektrische Signalquelle und die zweite elektrische Signalquelle sind mit einem Mutteroszillator, mittels welchem ein Referenzsignal erzeugbar ist, verbunden.

Die jeweilige Frequenz kann vorbestimmt oder mittels eines Betätigungselementes, wie eines Tasters, eines Drehknopfes oder eines Dual In-Line Package (DIP) Schaltelements, der jeweiligen elektrischen Signalquelle einstellbar sein. Beispielsweise beträgt die jeweilige Frequenz 100kHz, 250kHz, 500kHz, 750kHz, 1MHz, 2,5MHz, 5MHz, 7,5MHz, 10MHz, 25MHz, 50MHz, 75MHz, 100MHz, 250MHz, 500MHz, 750MHz oder 1GHz. Gemäß einer Ausführungsform kann die zweite Frequenz kleiner oder größer als die erste Frequenz sein.

Die Primärspule 101 und die jeweiligen Sekundärspulen 103, 105 können einen Differentialtransformator bilden oder in einem Differentialtransformator umfasst sein.
Der Frequenzumsetzer 107 kann einen Mischer zum Umsetzen des dritten elektrischen Signals und/oder des vierten elektrischen Signals in einen niedrigeren Zwischenfrequenzbereich umfassen. Ferner kann die Goertzelfilterbank 109 ein Filterelement, wie einen Goertzelfilter, zur Demodulation des ersten Zwischenfrequenzsignals und/oder des zweiten elektrischen Zwischenfrequenzsignals nach dem Goertzel-Algorithmus umfassen.

Gemäß einer Ausführungsform kann in der induktiven Weg- und Winkelsensorik, wie bei dem Positionssensor 100, ein auf Übertragern basierender Sensor verwendet werden, dessen sekundäre Ausgangsgröße eine in Abhängigkeit von dem Positionsgeber oder von einem Winkelgeber amplitudenmodulierte Spannung einer primärseitigen Trägerfrequenz, wie der ersten Frequenz, darstellt. Sekundärseitig kann daher eine sogenannte Zweiseitenband-Amplitudenmodulation (AM) mit Träger entstehen. Durch Präzisions-Demodulation der amplitudenmodulierten Sekundärspannungen und weiterer Verarbeitung gemäß dem gewählten spezifischen Messverfahren kann sodann auf den absoluten Weg oder den Winkel geschlossen werden.

Gemäß einer weiteren Ausführungsform kann eine Funktionsweise des Positionssensors 100 auf einer Auswertung einer Differenz von Sekundärspannungen beruhen, wie beispielsweise bei einem Permanentmagnetic Linear Contacless Displacement (PLCD) Verfahren, bei dem die Position eines koppelnden weichmagnetischen Kerns als Positionsgeber dienen kann, oder bei einem Linear Inductive Position Sensor (LIPS), bei dem ein Dauermagnet oder eine Sättigungszone im weichmagnetischen Kern die Position angeben kann. Diese Sensoren werden häufig bedingt durch das Kernmaterial mit relativ niedrigen Trägerfrequenzen, wie der ersten Frequenz, im kHz- Bereich betrieben.

Gemäß einer weiteren Ausführungsform kann eine Funktionsweise des Positionssensors 100 auf einem Verfahren beruhen, bei dem die Windungen der Primärspule 101 und/oder der jeweiligen Sekundärspulen 103, 105 nach einem spezifischen eindeutigen Muster ausgeführt sind, so dass sich mit einem entsprechenden Positionsgeber oder Lagengeber, beispielsweise einem Kurzschlussplättchen mit Wirbelstromeffekt, sekundärseitig sinus- und kosinusförmige Einhüllende mit starrem Phasenbezug der Zweiseitenband-AM mit Träger ergeben können. Durch AM-Demodulation der geträgerten Sinus- und Kosinusfunktion kann über die Arkustangens- Funktion eine Position oder der Ort des Positionsgebers errechnet werden.

Gemäß einer weiteren Ausführungsform kann die Primärspule 101 oder der verwendete Übertrager kernlos und mit wenigen Primärwindungen ausgeführt sein, beispielsweise als eine Printspule. Hierbei kann die erste Frequenz oder eine Trägerfrequenz, bedingt durch die kleine sich einstellende primäre Hauptinduktivität zumeist im unteren MHz-Bereich liegen, wodurch ein Mindestmaß an Übertragungswirkungsgrad der Primärspule 100 oder des Übertragers gewahrt bleibt. Bei niedrigeren Trägerfrequenzen kann das Spannungsübersetzungsverhältnis deutlich schlechter ausfallen und nicht mehr überwiegend von der mechanischen Konstruktion, wie dem Windungsverhältnis Primär/Sekundär und dem Kopplungsgrad, sondern in erster Linie von der Größe der Primärspule 101, wie einer primären Hauptinduktivität, oder deren Impedanz bestimmt werden. Diese Anwendung der ersten Frequenz oder der Trägerfrequenz im Hochfrequenz (HF) Bereich, d.h. über 1 MHz liegend, wird nachfolgend betrachtet.

Gemäß einer weiteren Ausführungsform kann als Präzisions-Demodulator ein kohärent demodulierender Synchrondemodulator in Form eines analogen Multiplizierers eingesetzt werden. Dieser kann in dem betrachteten Hochfrequenz-Bereich technische und wirtschaftliche Vorteile bieten, weil er einerseits relativ einfach hergestellt und integriert werden kann, und andererseits mittels diesem eine analoge Präzisionsdemodulation in diesem Frequenzbereich ermöglicht werden kann. Präzisionsdemodulation bedeutet in diesem Zusammenhang eine verzerrungsfreie Abtrennung der Nachrichteninformation vom Träger selbst dann, wenn der Modulationsgrad des AM-Signals sehr groß ausfällt, das sekundärseitige Signalgemisch also zu bestimmten Zeitpunkten sehr klein ausfallen kann. Es kann in diesem Demodulator ein synchroner Modulationsvorgang stattfinden, indem die Zweiseitenband-AM mit Träger mit einer zugesetzten Trägerschwingung moduliert wird, deren Frequenz- und Phasenlage der ursprünglichen in der Zweiseitenband-AM mit Träger entspricht.

Gemäß einer weiteren Ausführungsform kann ein Multiplizierer folgende Übertragungsfunktion aufweisen:

$$u_{De}(t) = u_M(t) \cdot u_{LO}(t)$$

wobei $u_{De}$ einen Spannungswert eines von dem Multiplizier ausgegebenen elektrischen Signals, $u_M$ einen Spannungswert des dritten elektrischen Signals oder des vierten elektrischen Signals, $u_{LO}$ einen Spannungswert des zweiten elektrischen Signals und t die Zeit bezeichnet.

Gemäß einer weiteren Ausführungsform kann das zu demodulierende AM Signal mit Träger gegeben sein durch

$$u_M(t) = \hat{u}_T \left( \cos \omega_T t + \frac{m}{2} \cos(\omega_T + \omega_S)t + \frac{m}{2} \cos(\omega_T - \omega_S)t \right)$$

wobei m einen Modulationsgrad bezeichnet. Ferner kann das zweite elektrische Signal oder eine zugesetzte Trägerschwingung $u_{LO}(t)$ mit einer gegenüber der ursprünglichen Trägerschwingung angenommenen Phasenverschiebung $\varphi_{LO}$ gegeben sein durch

$$u_{LO} = \hat{u}_{LO} \cos(\omega_T t + \varphi_{LO})$$

Gemäß einer weiteren Ausführungsform können $u_{De}(t)$ und $u_{LO}(t)$ einem Synchrondemodulator zugeführt werden. Dessen Ausgangssignal kann gegeben sein durch

$$u_{De}(t) = \frac{1}{2} \hat{u}_T \cdot \hat{u}_{LO} \left[ (1 + m \cdot \cos \omega_S t) \cdot \cos \varphi_{LO} + \cos(2\omega_T t + \varphi_{LO}) + \frac{m}{2} \cos(2\omega_T t + \omega_S t + \varphi_{LO}) + \frac{m}{2} \cos(2\omega_T t - \omega_S t + \varphi_{LO}) \right]$$

Die Rechnung zeigt, dass neben der modulierenden Signalschwingung im Spektrum des Demodulationsproduktes noch die Seitenschwingungen zur doppelten Frequenz der Trägerschwingung auftreten können. Diese können im weiteren Verlauf der Signalverarbeitung durch Tiefpassfilter unterdrückt werden. Weiterhin ist erkennbar, dass die Amplitude der so gewonnen Signalschwingung nicht nur vom ursprünglichen Modulationssignal abhängt, sondern ebenso von der Phasenverschiebung $\varphi_{LO}$ des zugesetzten Trägers gegen den ursprünglichen Träger abhängen kann. Schwankungen der Phasendifferenz können sich als Amplitudenänderungen beim jeweiligen demodulierten Signal bemerkbar machen. Bei einer Phasenverschiebung von ungeraden Vielfachen von 90° kann die Signalamplitude Null werden. Hieraus wird ersichtlich, welche Bedeutung die Phasenlage bei der kohärenten Synchrondemodulation einnimmt. Ferner können bei einer Missachtung der Phasenbedingung Demodulationsfehler auftreten.

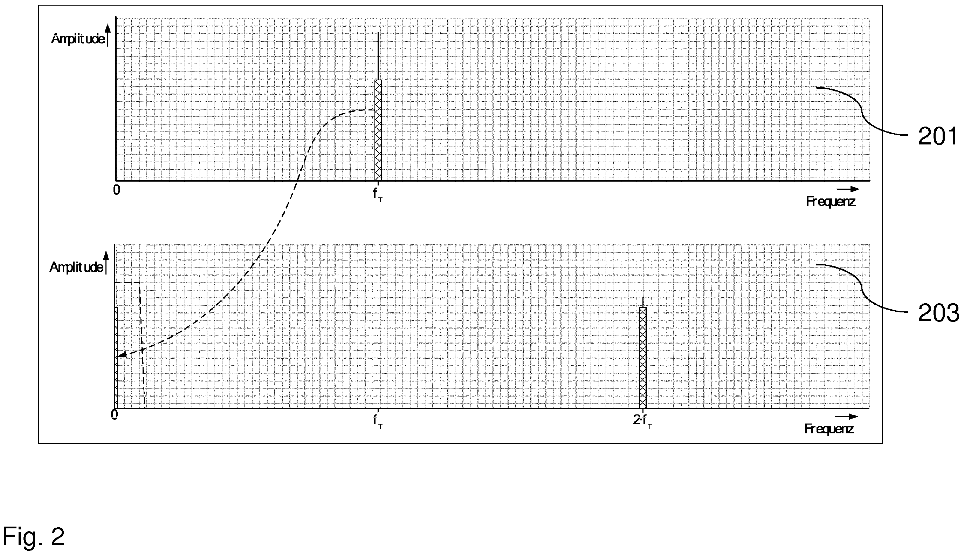

Fig. 2 zeigt eine spektrale qualitative Darstellung eines Umsetzprozesses einer Synchrondemodulation durch phasenrichtige Multiplikation der Zweiseitenband-AM mit Träger und einem zugesetzten Träger gleicher Frequenz und Phasenlage.

In Fig. 2 ist die spektrale Darstellung des Umsetzprozesses aufgeführt. Die sekundärseitigen zwei Zweiseitenband-AM mit Träger Signale können per Synchrondemodulator demoduliert werden. Ferner sind ein Eingangssignal 201 und ein Ausgangssignal 203 des Synchrondemodulators abgebildet.

In der ersten Variante wird der zugesetzte Träger aus dem primären Trägersignal abgeleitet. Eine fehlerfreie Demodulation in Bezug auf Phasenfehler ist bei dieser Variante gegeben, wenn die Übertragungsstrecke eines Übertragers, welcher durch die Primärspule 101 und die jeweiligen Sekundärspulen 103, 105 gebildet sein kann, keinerlei Phasenverschiebung erzeugt. Jedwede Änderung der sekundärseitigen Phasenlage in Bezug auf die Trägerphasenlage, die durchaus auch weg-, winkel-, temperatur- oder zeitabhängig sein kann, kann das Demodulationsergebnis verfälschen.

In der zweiten Variante wird der zugesetzte Träger aus dem sekundärseitigen Zweiseitenband-AM mit Träger Signal regeneriert, wodurch sich prinzipiell Phasenfehler durch den Übertrager nicht mehr auswirken können. Hierbei kann die Regenerierung des Trägers aus dem AM Signal aufwändig sein, insbesondere wenn der Modulationsgrad sehr groß, beispielsweise nahe 1, wird und somit das Signalgemisch zeitweilig so klein wird, dass eine Regeneration erschwert sein kann, wodurch der eigentlich vorteilhafte Synchrondemodulator somit faktisch das Verhalten und die Präzision eines einfachen inkohärenten Hüllkurvendemodulators annehmen kann.

Gemäß einer weiteren Ausführungsform kann in dem Positionssensor 100 ein AM-Demodulationsverfahren verwendet werden, das vollkommen hilfsträgerunabhängig und damit phasenunabhängig arbeiten aber dennoch die Präzision bieten kann, die auch der Synchrondemodulator vorweisen kann, sofern die genannten Nebenbedingungen richtig eingestellt sind. Verfahren, die diese Möglichkeit bieten, sind die so genannten inkohärenten AM-Demodulationsverfahren.

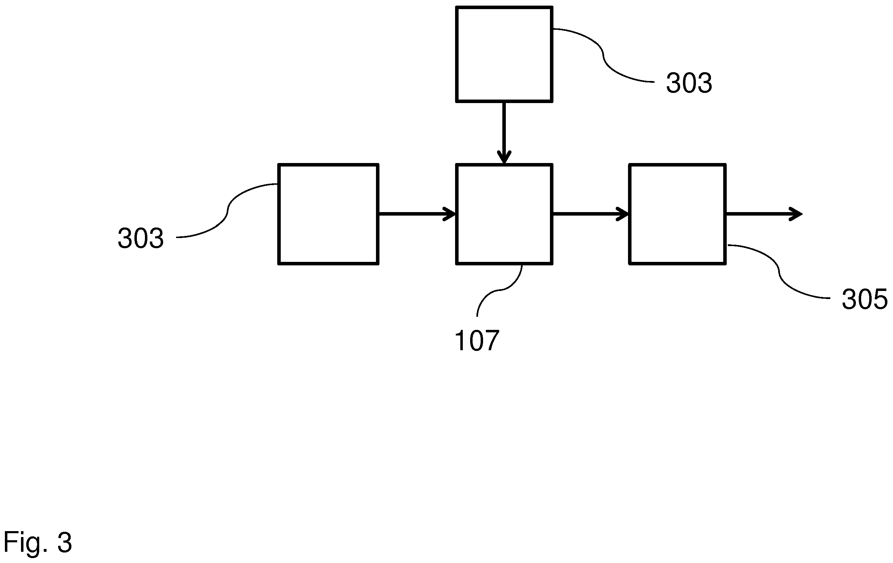

Fig. 3 zeigt ein Funktionsprinzip des Frequenzumsetzers 107. Ferner sind ein Trägeroszillator 301, ein Lokaloszillator 303 und ein selektiver Zwischenfrequenzverstärker 305 abgebildet. Der Trägeroszillator 301 kann zum Ausgeben eines elektrischen Signals mit einer Frequenz $f_T$ ausgebildet sein. Ferner kann der Lokaloszillator 303 zum Ausgeben eines elektrischen Signals mit einer Frequenz $f_{LO}$ ausgebildet sein. Der Frequenzumsetzer 107 kann ferner einen Mischer umfassen und zum Ausgeben eines elektrischen Signals mit Mischfrequenzen $f_{Misch}$ ausgebildet sein. Ferner kann der selektive Zwischenfrequenzverstärker 305 einen Bandpassfilter umfassen und zum Ausgeben eines elektrischen Signals mit einer Frequenz $f_{ZF}$ ausgebildet sein.

Gemäß einer Ausführungsform kann eine Frequenzumsetzung mit Hilfe des Frequenzumsetzers 107 oder eines Mischers in einen niedrigeren Zwischenfrequenzbereich ZF und die anschließende AM-Demodulation mit einem inkohärenten Demodulationsverfahren verwendet werden. Anders als bei der artverwandten Frequenzteilung, die mit Rechtecksignalen arbeitet und durch die auch eine Verarbeitung bei niedrigeren Frequenzen ermöglicht wird, kann bei der Frequenzmischung die ursprünglich aufmodulierte Information vollständig erhalten bleiben.

Fig. 3 zeigt das Funktionsprinzip anhand eines Blockschaltbildes: Die kosinusförmige Trägerfrequenz $f_T$ und die kosinusförmige Hilfsfrequenz des Lokaloszillators 303 $f_{LO}$ werden in dem Frequenzumsetzer 107 gemischt. Der Frequenzumsetzer 107 kann sich wie ein idealer Multiplizierer verhalten, bei dem ausgangsseitig die Mischfrequenzen $f_{Misch}$ als Summe- und Differenzfrequenz der Eingangsfrequenzen in Erscheinung treten.

Gemäß einer Ausführungsform kann zur Optimierung des Mischerwirkungsgrades der Frequenzumsetzer 107 als ein Schaltmischer ausgelegt werden, bei dem das Lokaloszillatorsignal ein zeitsymmetrisches Rechtecksignal darstellt.

Unter Berücksichtigung der Fourierreihe der zeitsymmetrischen Rechteckschwingung multipliziert mit dem kosinusförmigen Trägersignal, wobei hier von einem unmodulierten Kosinussignal ausgegangen wird, kann das Ausgangssignal des Frequenzumsetzers 107 im Zeitbereich folgendermaßen ausgedrückt werden:

$$u_{Misch}(t) = u_{LO}(t) \cdot u_T(t)$$

$$u_{Misch}(t) = \frac{4}{\pi} \cdot \underbrace{\left( \cos \omega_{LO} \cdot t - \frac{1}{3} \cos 3\omega_{LO} t + \frac{1}{5} \cos 5\omega_{LO} t \mp ... \right)}_{\text{zeitsymmetrische Rechteckschwingung (LO)}} \cdot \underbrace{\hat{u}_T \cos \omega_T \cdot t}_{\text{Information (hier: Trägersignal)}}$$

Durch Verwendung von Additionstheoremen ergibt sich:

$$u_{Misch}(t) = \frac{4}{\pi} \cdot \frac{1}{2} \hat{u}_T \Bigg( \cos(\omega_{LO} + \omega_T)t + \cos(\omega_{LO} - \omega_T)t - \frac{1}{3} \cos(3\omega_{LO} + \omega_T)t -$$

$$- \frac{1}{3} \cos(3\omega_{LO} - \omega_T)t + \frac{1}{5} \cos(5\omega_{LO} + \omega_T)t + \frac{1}{5} \cos(5\omega_{LO} - \omega_T)t \mp ... \Bigg)$$

Einmal in den Zwischenfrequenz (ZF) Bereich umgesetzt, können alle Möglichkeiten der einfachen und kostengünstigen Verstärkung, Filterung und Demodulation zur Verfügung stehen. Die Mischprodukte höherer Ordnung und eventuelle Träger- und LO-Reste können durch einen ZF-Bandfilter, wie den Bandpassfilter des selektiven Zwischenverstärkers 305, unterdrückt werden.

Aus der Vielzahl der praktisch verfügbaren Mischerprinzipien mit individuellen Vor- und Nachteilen, soll nachfolgend beispielhaft der symmetrische Gegentakt-Schaltmischer verwendet werden, der für den angestrebten Frequenzbereich des Positionssensors 100, dem oben genannten idealen Mischer sehr nahe kommt.

Bei symmetrischer Signalzuführung von $f_T$ und $f_{LO}$ kann man einen Frequenzumsetzer 107 oder Mischer erhalten, der sich bei sehr niedrigen Kosten durch hohe Trägerunterdrückung, niedrige Mischverluste und der Fähigkeit auszeichnet, auch bei großen Eingangssignalen neben den erwarteten Mischprodukten keine weiteren, neuen Frequenzen zu erzeugen, die womöglich im ZF Bereich in Erscheinung treten können, und dadurch eine hohe Großsignalfestigkeit aufweist.

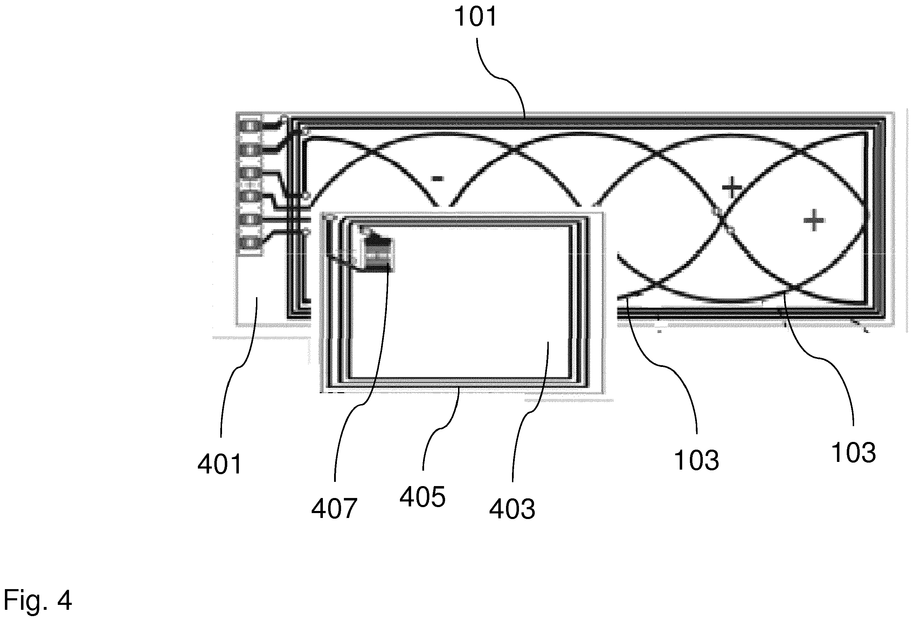

Fig. 4 zeigt eine Anordnung mit einer Platine 401 und einem Positionsgeber 403. Auf der Platine 401 sind die Primärspule 101, die erste Sekundärspule 103 und die zweite Sekundärspule 105 angeordnet. Ferner umfasst der Positionsgeber 403, wie ein Target, einen resonanten Parallelschwingkreis mit einer Spule 405 und einem Kondensator 407.

Bei der Anordnung handelt es sich um einen eisenlosen Planartransformator. Auf der feststehenden Platine 401 sind die Primärspule 101, beispielsweise eine Anregungswicklung, und die jeweiligen Sekundärspulen 103, 105, beispielsweise Sensorwicklungen, angebracht.

Die jeweiligen Sekundärspulen 103, 105, wie Sensorspulen, sind jede für sich so angeordnet, dass sich bei fehlendem Positionsgeber 403 die induzierten Spannungen der Primärspule 101 oder einer Primärwicklung aufheben. Vorzugsweise kann dies durch Windungen realisiert werden, deren Windungssinn sich umkehrt. Die Flächeninhalte der jeweils umschlossenen Windungen können immer gleich sein. Auf die Anregungswicklung wird nun eine hochfrequente Wechselspannung, beispielsweise im unteren MHz-Bereich, gegeben. Die jeweiligen Sekundärspulen 103, 105 können geometrisch so anordnet werden, dass ihre Ausgangssignale einen Sinus- und einen Kosinusverlauf darstellen.

Gemäß einer Ausführungsform kann ein auf die Sensorgeometrie abgestimmtes Metallelement, wie ein Metalltarget, zum Bestimmen der Position über die Platine 401 geführt werden, um bestimmte Bereiche der Sensorwindungen der jeweiligen Sekundärspulen 103, 105 zu bedämpfen. Diese Dämpfung entsteht durch induzierte Wirbelströme in dem Metallelement. Das jeweilige Ausgangssignal kann sich aus dem Anteil der unbedämpften jeweiligen Sekundärspulen 103, 105 ergeben.

Gemäß einer weiteren Ausführungsform umfasst der Positionsgeber 403 einen passiven Schwingkreis. Dieser kann die Spule 405, wie eine Planarspule, und den Kondensator 407, wie eine Kapazität, umfassen. Ferner kann eine Resonanzfrequenz des passiven Schwingkreises auf die erste Frequenz, wie eine Anregungsfrequenz der Primärspule 101, abgestimmt sein. Diese Technologie kann diverse Vorteile aufweisen. Ein Vorteil kann dadurch gegeben sein, dass die Ausgangssignale der jeweiligen Sekundärspulen 103, 105, wie der Sensorwicklungen, nicht durch den unbedämpften Anteil resultieren. Durch die Auslegung des Positionsgebers 403, wie eines Targets, in Resonanz mit der ersten Frequenz kann eine verbesserte Signalübertragung erreicht werden. Der Gütefaktor kann hierbei um das 10fache höher sein als bei einem Metallelement oder Metalltarget. Ein weiterer Vorteil dieser Anordnung kann durch eine geringe Abstandsempfindlichkeit gegeben sein. Wie bereits beschrieben ist die Resonanzfrequenz des Positionsgebers 403, wie eines LC Targets, auf die erste Frequenz ausgelegt. In einem relativ schmalbandigen Frequenzbereich reagieren die jeweiligen Sekundärspulen 103, 105, wie Sensorspulen, auf die Position und die Änderung des Positionsgebers 403, wie eines Targets. Ändert man die erste Frequenz und bewegt sich außerhalb der Resonanzfrequenz des Schwingkreises, so kann der Positionssensor 100 seine Wirkung verlieren.

Gemäß einer weiteren Ausführungsform kann die erste Frequenz in dem Bereich von 1,5MHz bis 6MHz liegen.

Hierbei kann 1,5 MHz ungefähr eine Funktionsuntergrenze des induktiven Messprinzips mit der vorliegenden Trafokonstruktion markieren, während der hier beispielhaft eingesetzte symmetrische Gegentakt-Schaltmischer bis circa 6MHz einsetzbar ist.

Gemäß einer weiteren Ausführungsform kann eine sich in dem Umsetzprozess im Frequenzumsetzer 107 ergebende Zwischenfrequenz (ZF) Frequenz $f_{ZF}$ < 200kHz betragen. Vorzugsweise kann die ZF Frequenz $f_{ZF}$ < 100 kHz betragen, da kleine ZF Frequenzen wesentlich zu einer einfachen und damit preiswerten analogen Signalvorverarbeitung beitragen können.

Gemäß einer weiteren Ausführungsform kann die überwiegende Signalverarbeitung, wie eine inkohärente AM Demodulation, auf digitale Weise erfolgen. Hierzu kann ein Mikrokontroller, wie ein μC, eingesetzt und optimal ausgenutzt werden, d.h. neben der digitalen Signalverarbeitung kann dieser noch für weitere Aufgaben, beispielsweise die Erzeugung von erster Frequenz und zweiter Frequenz, wie Träger- und Lokaloszillatorfrequenz, herangezogen werden. Obwohl prinzipiell auch ein analoger Demodulator verwendet werden kann, kann durch Verwenden des Mikrokontrollers eine Kostenreduktion erreicht werden.

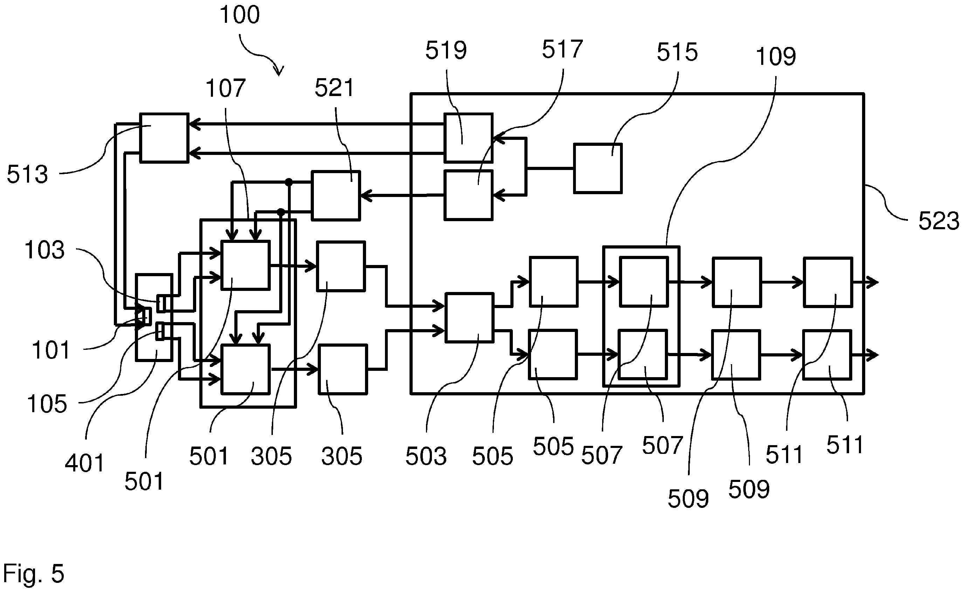

Fig. 5 zeigt eine schematische Darstellung des Positionssensors 100 gemäß einer weiteren Ausführungsform. Der Positionssensor 100 umfasst die Primärspule 100, die jeweiligen Sekundärspulen 103, 105, den Frequenzumsetzer 107 mit zwei Mischern 501, zwei selektive Zwischenfrequenzverstärker 305, welche jeweils einen Bandpassfilter umfassen, einen Analog-Digital-Umsetzer 503, zwei Einrichtungen 505 zur Signalfensterung, die Goertzelfilterbank 109 mit zwei Goertzelfiltern 507, zwei Einrichtungen 509 zur Linearisierung, zwei Signalausgänge 511, einen Verstärker 513, den Mutteroszillator 515, zwei Timer 517, 519 und einen Synthesizer 521. Der Analog-Digital-Umsetzer 503, die Einrichtungen 505 zur Signalfensterung, die Goertzelfilterbank 109, die Einrichtungen 509 zur Linearisierung, die Signalausgänge 511, der Mutteroszillator 515 und die Timer 517, 519 sind in einem Mikrokontroller 523, wie einem μC mit digitaler Signalverarbeitung, angeordnet. Ferner sind die Primärspule 101 und die jeweiligen Sekundärspulen 103, 105 auf der Platine 401 angeordnet.

Der Verstärker 513 kann eine Primäransteuerung bilden. Ferner kann der Timer 519 die erste elektrische Signalquelle bilden. Der Timer 517 und der Synthesizer 521 können ferner die zweite elektrische Signalquelle bilden. Der Mutteroszillator 515 bildet den Frequenzgenerator zum Erzeugen des weiteren elektrischen Signals mit der dritten Frequenz. Die Einrichtungen 509 zur Linearisierung können ferner zum Durchführen einer Kennlinienkorrektur ausgebildet sein. Ferner können die Signalausgänge 511 digitale oder analoge Ausgabeschnittstellen sein. Der von der ersten Sekundärspule 103 ausgehende Signalverarbeitungspfad kann ferner ein Sinus-Pfad sein, der von der zweiten Sekundärspule 105 ausgehende Signalverarbeitungspfad kann ferner ein Kosinus-Pfad sein. Ferner können die Platine 401, die Primärspule 101 und die jeweiligen Sekundärspulen 103, 105 einen Sinus/Kosinus Übertrager bilden. Der Timer 519 kann zum Ausgeben des ersten elektrischen Signals mit der ersten Frequenz $f_T$ ausgebildet sein. Ferner kann der Synthesizer zum Ausgeben des zweiten elektrischen Signals mit der zweiten Frequenz $f_{LO}$ ausgebildet sein. Die selektiven Zwischenfrequenzverstärker 305 können ferner jeweils zum Ausgeben eines elektrischen Signals mit der Frequenz $f_{ZF}$ ausgebildet sein. Ferner kann der Timer 517 zum Ausgeben eines elektrischen Signals mit der Frequenz $f_h$ ausgebildet sein.

Gemäß einer Ausführungsform kann der in Fig. 5 gezeigte Positionssensor 100 eine Realisierungsmöglichkeit mit einer Frequenzumsetzung in das so genannte Basisband der weiteren digitalen Signalverarbeitung darstellen. Basisband bedeutet in diesem Zusammenhang, dass die durch den Umsetzprozess entstehende ZF Frequenz nebst Seitenfrequenzen, in einem Frequenzbereich erscheint, der von 0 bis zur halben Abtastfrequenz des eingesetzten Analog-Digital-Umsetzers 503 reichen kann. Der Abtastvorgang kann also gemäß dem allgemeinen Abtasttheorem fehlerfrei erfolgen. Dem Signalfluss folgend ist in Fig. 5 im linken Bereich zunächst der bereits besprochene Übertrager angeordnet dessen jeweilige Sekundärspulen 103, 105 derartig ausgeführt sind, dass sich durch Bewegung des nicht dargestellten Positionsgebers 403 eine sinus- bzw. kosinusförmige Einhüllende der Trägerschwingung im Zeitbereich ergibt. Primärseitig kann mit einem Trägerfrequenzgenerator angesteuert werden. Die weitere analoge Verarbeitung der Signale mit sinus- bzw. kosinusförmiger Einhüllenden erfolgt für jedes Signal separat im entsprechenden Sinuspfad bzw. im Kosinuspfad, die identische Eigenschaften aufweisen können. Das geträgerte Sinussignal wird zunächst im darauf folgenden Mischer 501 mit Hilfe des zweiten elektrischen Signals mit der zweiten Frequenz in einen Zwischenfrequenzbereich umgesetzt. Der nachfolgende selektive Zwischenfrequenzverstärker 305 befreit das Signal einerseits von unerwünschten höheren Mischprodukten und kann gleichermaßen als Anti-Aliasing Filter für den nachfolgenden Abtastvorgang im Analog-Digital-Umsetzer 503 dienen. Weiterhin findet eine Pegelanpassung statt, so dass der nachfolgende Analog-Digital-Umsetzer 503 hinreichend ausgesteuert werden kann.

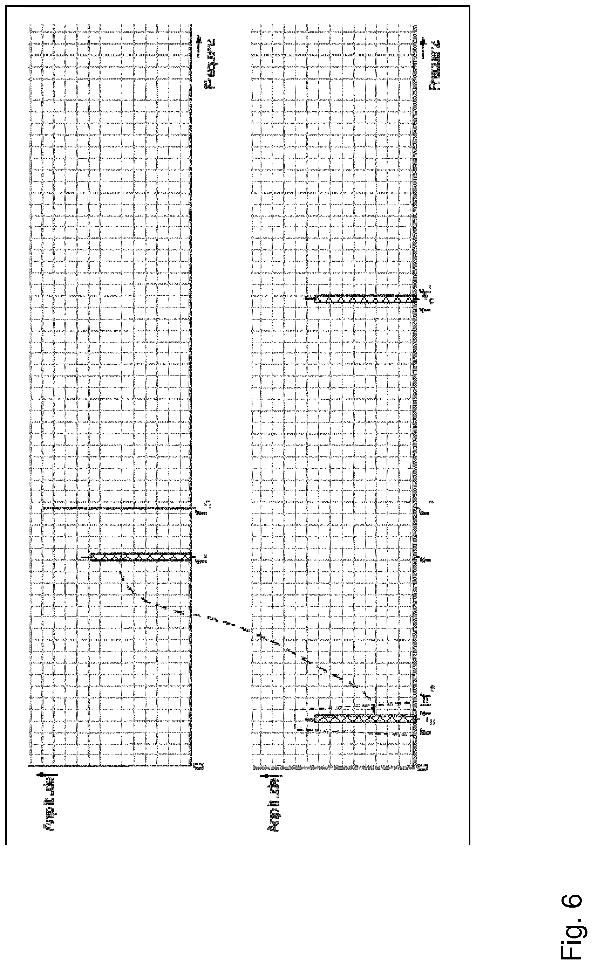

Fig. 6 zeigt eine spektrale qualitative Darstellung einer Frequenzumsetzung von einem Hochfrequenzbereich in einen Zwischenfrequenzbereich. Beispielsweise definiert der Zwischenfrequenzbereich ein Basisband.

Gemäß einer Ausführungsform kann mittels der analog nach digital Umsetzung die Signalverarbeitung auf digitale Weise erfolgen. Diese kann weiterhin zweipfadig erfolgen, beispielsweise durch Zeitmultiplex in dem Mikrokontroller 523 oder einem μC.

Gemäß einer weiteren Ausführungsform kann als digitales AM-Demodulationsverfahren der Goertzel Algorithmus, wie eine 1-Punkt diskrete Fourier-Transformation (DFT), zur Anwendung kommen. Mit der Berechnung der 1-Punkt DFT kann auf recht einfache Weise eine Präzisionsdemodulation des amplitudenmodulierten ZF Signals durchgeführt werden. Darüber hinaus ergeben sich durch dessen Einsatz weitere Vorteile:

- Es kann ein selektiver Demodulationsvorgang stattfinden, dessen Digitalfilter, mit einmal fest ausgewählten und unverrückbar eingestellten Parametern eine Ergänzung zum analogen ZF Filter darstellen kann.
- Basierend auf dem Prinzip der Überabtastung und Dezimierung kann mit dem Goertzel Algorithmus, abhängig von der Parametrierung, eine deutliche Verbesserung der gesamten Signalqualität einhergehen. Eine höhere effektive digitale Auflösung kann einen Zugewinn an Signal/Rauschabstand der Messgröße mit sich bringen.
- Eine flexible Wahl der Goertzel Parameter: Wichtige Parameter der DFT, wie z.B. die Blockgröße N können direkt den Grad der Überabtastung und damit sowohl die Signalqualität als auch die Bandbreite des Goertzel Filters beeinflussen. Gegensätzlich gegenüber stehen wichtige Sensorparameter, wie beispielsweise maximale zu verarbeitende Modulationsfrequenz des AM-ZF-Signals oder die Durchlaufzeit, wie eine Gruppenlaufzeit. Das ist die Zeit, die benötigt wird um eine Änderung der physikalischen Größe als Messergebnis anzuzeigen, deren fehlerfreies Erfassen ebenfalls von beispielsweise der Blockgröße N abhängt. Durch die flexible Definition der Goertzel Parameter kann hierbei eine Kompromissfindung erleichtert werden.

Gemäß einer weiteren Ausführungsform kann es vorteilhaft sein, der Goertzelfilterbank 109 oder einem Goertzelfilter 507 die Einrichtung 505 zur Signalfensterung, wie einen Signalblock "Fensterung", vorzuschalten. Während selbst erzeugte Frequenzen, wie z.B. der umgesetzte Träger in die ZF Ebene so gewählt werden können, dass deren Frequenz stets ein ganzzahliges Vielfaches oder Teiler der Abtastfrequenz ist und somit ohne besondere Fensterfunktion fehlerfrei verarbeitet werden kann, so gilt dies für die Seitenfrequenzen des AM Signals in ZF-Lage häufig nicht.

Gemäß einer weiteren Ausführungsform können die Seitenfrequenzen von der zu sensierenden physikalischen Größe bestimmt werden und demnach in beliebigem Verhältnis zur Abtastfrequenz stehen. Dies kann insbesondere bei Anwendung des Rechteckfensters, gleichbedeutend mit keiner besonderen Fensterfunktion, bei höheren Modulationsfrequenzen, wie Seitenfrequenzen vom Träger der AM, zu linearen Verzerrungen führen: In Abhängigkeit von der AM-Modulationsfrequenz kann durch das Goertzelfilter 507 eine Gewichtung vorgenommen werden, so dass niedrige trägernahe Frequenzen mit hoher Amplitude demoduliert werden, höhere trägerfernere Frequenzen jedoch mit einer mitunter deutlich niedrigeren Amplitude.

Gemäß einer weiteren Ausführungsform kann die Art der Fensterfunktion das Durchlassverhalten des Goertzelfilters 507 hinsichtlich Selektivität, wie eine Flankensteilheit, aber auch die nutzbare Breite des Durchlassbereichs entscheidend mitbestimmen. Anders ausgedrückt kann zusammenfassend gesagt werden, dass die Fensterfunktion neben der richtig gewählten Blocklänge N, den Amplitudengang des digitalen AM Demodulators in Form des Goertzelfilters 505 bestimmt.

Gemäß einer weiteren Ausführungsform kann die weitere digitale Signalverarbeitung durch die Einrichtungen 509 zur Linearisierung oder eine Stufe zur Linearisierung der demodulierten Sinus- oder Kosinusfunktion komplettiert werden, die sich im Digitalen besonders einfach ausführen lässt. Einfache Verfahren, wie z.B. die stückweise lineare Approximation, können einen überschaubaren zusätzlichen Rechenaufwand darstellen.

Gemäß einer weiteren Ausführungsform können an den Signalausgängen 511, wie an Ausgangsschnittstellen, die demodulierten Sinus- und Kosinussignale analog oder digital zur weiteren Verarbeitung ausgegeben werden.

Gemäß einer weiteren Ausführungsform können aufgrund der Verwendung des Goertzel-Algorithmus als Demodulationsverfahren die verwendeten oder vorkommenden Frequenzen auf der Basis der folgenden Punkte gewählt werden:

- Sämtliche am Signalverarbeitungsprozess beteiligten Frequenzen, wie die jeweiligen Frequenzen der jeweiligen elektrischen Signale, die Trägerfrequenz, die Lokaloszillatorfrequenz, die Abtastfrequenz, und/oder Taktfrequenzen der digitalen Signalverarbeitung, können von einer gemeinsamen Zeitbasis, wie dem Mutteroszillator 515, abgeleitet werden. Hieraus kann in Verbindung mit dem Goertzel Algorithmus der Vorteil erwachsen, dass sich Frequenzabweichungen des Mutteroszillators 515 zwar auf den absoluten Wert der ZF Frequenz auswirken, es schlussendlich jedoch bezogen auf das Ergebnis der Demodulation ohne Folgen bleiben kann. Die Mittenfrequenz des Goertzelfilters 507 kann sich, bedingt durch die starre Verkoppelung der erzeugten Frequenzen untereinander, proportional so einstellen, dass sie mit der ZF Frequenz zusammenfällt. Das Goertzelfilter 507 kann in dieser Konstellation somit ein gewissermaßen mitlaufendes Filter darstellen, das auf die ZF Frequenz abgeglichen ist.
- Die durch die Mischung entstehende ZF Frequenz kann bei einer Signalverarbeitung im Basisband im Frequenzbereich $0 < f_{ZF} < f_s/2$ liegen, um das Abtasttheorem zu erfüllen. Bei Anordnung nahe 0 oder nahe der halben Abtastfrequenz kann berücksichtigen werden, dass es sich bei dem ZF Signal um ein moduliertes Signal mit Seitenfrequenzen handelt, die obige Bedingung auch erfüllen können.
- Die Abtastfrequenz kann ein ganzzahliges Vielfaches der ZF Frequenz sein. Dadurch kann eine Dimensionierung des Goertzelfilters 507 erleichtert werden. Ferner kann erreicht werden, dass der in die ZF Lage umgesetzte Träger stets mit der Mittenfrequenz des Durchlassbereichs des Goertzelfilters 507 zusammenfällt. Nichtlineare Verzerrungen des demodulierten Signals, bedingt durch eine unsymmetrische Lage der Seitenfrequenzen im ZF Signal bezüglich des Durchlassbereichs des Goertzelfilters 507, können hierbei vermieden oder zumindest reduziert werden.

Beispielsweise werden folgende Werte eingestellt. Diese dienen dann als Basis für weitere daraus abgeleitete und angepasste Frequenzen:

Haupttaktfrequenz des Mutteroszillators 515: $f_{mc}$= 24MHz.
Abtastfrequenz für jeweils beide Pfade: $f_s$= 160kHz.

Gemäß einer weiteren Ausführungsform kann durch Integration dieser Baugruppen in den Mikrokontroller 523 der Positionssensor 100 kostengünstiger hergestellt werden, insbesondere wenn die in Fig. 5 dargestellten Timer 517, 519 des Mikrokontrollers 523 direkt zur Erzeugung der Trägerfrequenz $f_T$ und der Frequenz des Synthesizers 521, wie eines Lokaloszillators, $f_{LO}$ verwendet werden könnten. Da die Mikrokontroller 523 internen Timer 517, 519 nur Frequenzen erzeugen, die mit ganzzahligem Teilerfaktor aus der Haupttaktfrequenz geteilt wurden, ergibt bereits eine überschlägige Rechnung, dass obige Bedingungen in Bezug auf Lage der ZF Frequenz und Mindestträgerfrequenz nicht ohne Zusatzaufwand erfüllbar sind. Eine praktische kleine ZF Frequenz, die aus oben genannten Gründen anzustreben ist, lässt sich dann erreichen:

- wenn die Teilerfaktoren div1 und div2 zur Erzeugung von $f_T$ und $f_{LO}$ gemäß den Beziehungen $f_T = \dfrac{f_{mc}}{div1}$ und

  $f_{LO} = \dfrac{f_{mc}}{div2}$ möglichst groß sind; und

- wenn div1 und div2 die Betragsdifferenz eins ergeben: Idiv1-div2I=1. $div1 \in \mathbb{N}; \ div2 \in \mathbb{N}.$

Es ist erkennbar, dass selbst bei einem gewählten Faktor div1=16$\hat{=}f_T$=1,5MHz und div2=17$\hat{=}f_{LO}$≈1,412MHz, entsprechend einer niedrigen Trägerfrequenz und der Betragsdifferenz eins zwischen div1 und div2, bereits die Anforderung bezüglich der ZF Frequenz 0< $f_{ZF}$ < $f_s$/2 möglicherweise verfehlt werden, da sich ergibt: $f_{ZF}$= $f_T$ - $f_{LO}$= 1,5MHz - 1,412MHz ≈ 88,24kHz.

Gemäß einer weiteren Ausführungsform kann zum Erreichen einer hinreichend kleinen ZF Frequenz eine "p-q Frequenzsynthese" verwendet werden. Hierbei wird die passende LO-Frequenz durch Vervielfältigung um den ganzzahligen Faktor q einer Hilfsfrequenz $f_h$ gewonnen, die frequenzgleich der angestrebten ZF Frequenz ist. Die Hilfsfrequenz kann zuvor durch Frequenzteilung mit dem Faktor p aus der Trägerfrequenz gewonnen werden, wobei gilt: Ip-qI= 1. Um eine den obigen Bedingungen entsprechende Frequenzkonstellation zu finden kann wie folgt vorgegangen werden:

- Auswahl einer den Anforderungen entsprechenden ZF Frequenz;
- Auswahl einer ersten Frequenz oder Trägerfrequenz $f_T$, die sowohl den Anforderungen genügt als auch ein ganzzahliges Vielfaches der gewählten ZF Frequenz darstellt; und

- Berechnung der ganzzahligen Faktoren $p = \dfrac{f_T}{f_{ZF}}$ und q= p±1. $p \in \mathbb{N}; \ q \in \mathbb{N}$

Während obiges Ablaufschema uneingeschränkt anwendbar ist, lassen sich aus der Vielzahl möglicher Frequenzkombinationen welche finden, die mit einem deutlich kleineren Vervielfältigungsfaktor q ebenfalls sämtliche Bedingungen erfüllen können. Ein kleinerer Faktor q kann den Schaltungsaufwand verringern und somit Kosten sparen.

Beispielsweise stellen die Frequenzen $f_T$= 4MHz und $f_{ZF}$= 32kHz eine solche Kombination dar. Die Hilfsfrequenz liegt hier nicht bei 32kHz, sondern die Vervielfältigung kann, um auf eine LO-Frequenz von $f_{LO}$= 4,032MHz zu gelangen, auch von 192kHz aus erfolgen. Damit können sämtliche Anforderungen an die beteiligten Frequenzen erfüllt sein.

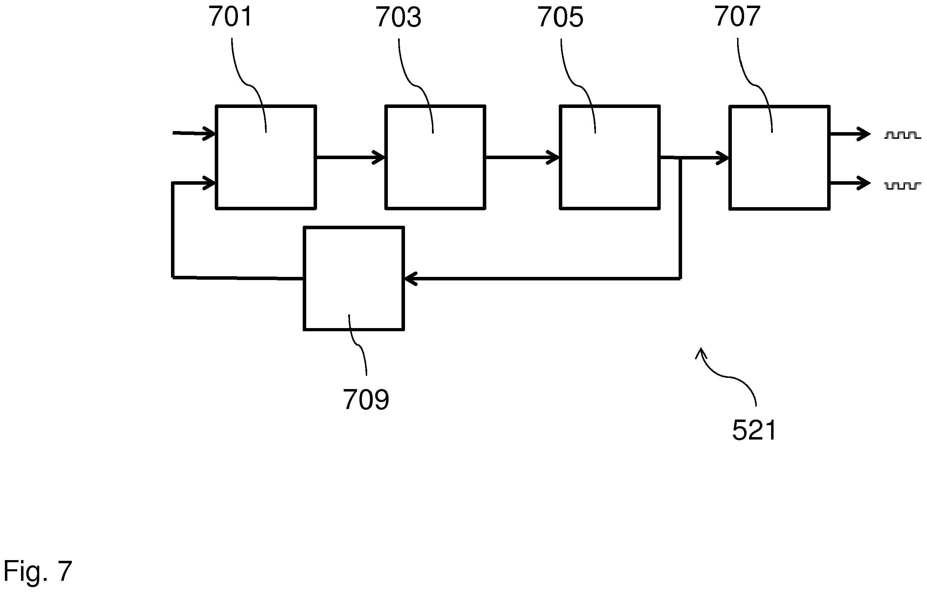

Fig. 7 zeigt eine schematische Darstellung des Synthesizers 521 gemäß einer Ausführungsform. Der Synthesizer 521 kann als ein Frequenzvervielfacher und zur Ausgabe eines signal- und zeitsymmetrischen Rechtecksignals ausgebildet sein. Ferner umfasst der Synthesizer einen Phasendetektor 701, ein Schleifenfilter 703, wie ein Tiefpassfilter, einen spannungsgesteuerten Oszillator 705, wie eine Voltage Controlled Oscillator (VCO), ein Flip-Flop 707, wie ein D-Flip-Flop, und einen Frequenzteiler 709.

Der Phasendetektor 701 kann ein elektrisches Signal mit der Frequenz $f_H$ empfangen. Ferner kann der spannungsgesteuerte Oszillator 705 ein elektrisches Signal mit der Frequenz 42$f_H$ ausgeben. Das Flip-Flop 707 kann ferner zwei elektrische Signal mit der Frequenz 21$f_H$ ausgeben. Ferner kann der Frequenzteiler 709 ausgebildet sein, eine Frequenz eines eingehenden elektrischen Signals um den Faktor 42 zu teilen.

Während die Trägerfrequenz $f_T$ = 4MHz und die Hilfsfrequenz $f_h$ = 192kHz, wie in Fig. 5 dargestellt, direkt über die Timer 517, 519 des Mikrokontroller 523 erzeugt werden können, kann die Vervielfältigung von 192kHz auf 4,032MHz= $f_{LO}$ z.B. mit dem in der Fig. 7 dargestellten Synthesizer 521, wie einem PLL Frequenzsynthesizer, erfolgen. Hierbei kann die Ausgangsfrequenz des spannungsgesteuerten Oszillators 705 ein ganzzahliges Vielfaches der Vergleichsfrequenz $f_h$ sein, wobei der Vervielfältigungsfaktor vom Teilerfaktor des sich in der Rückkoppelschleife befindlichen Frequenzteilers bestimmt wird. Aus rein praktischen Gründen beträgt der Faktor q nicht q=21 wie erforderlich, sondern q=42. Dies ist der Tatsache geschuldet, dass für die Ansteuerung des Mischers 501 bevorzugt ein signal- und zeitsymmetrisches Rechtecksignal verwendet wird. Das am Ausgang des Synthesizers 523 befindliche Flip-Flop 707 kann dieses abgleichfrei zur Verfügung stellen. Da mit dem Einsatz des Flip-Flops 707 eine Frequenzteilung mit Faktor zwei einhergehen kann, kann am Ausgang des Flip-Flops 707 das LO Signal mit der richtigen Frequenz und Signalform verfügbar sein.

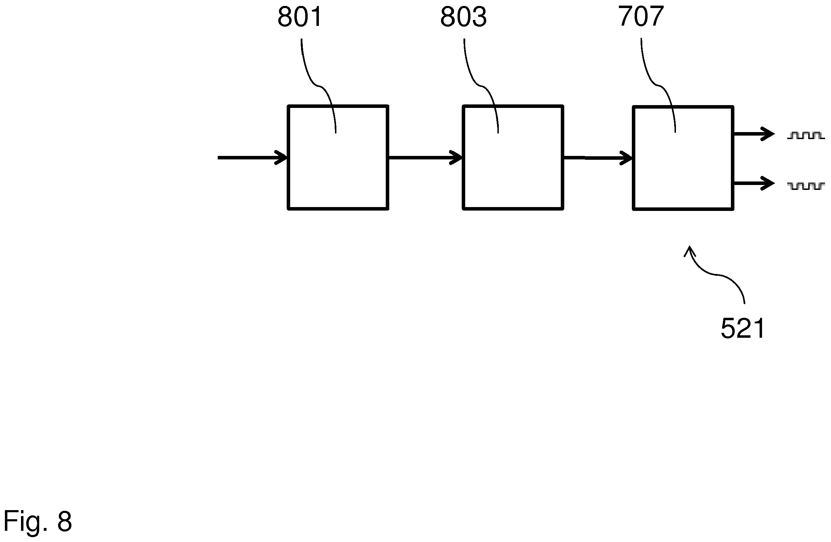

Fig. 8 zeigt eine schematische Darstellung des Synthesizers 521 gemäß einer weiteren Ausführungsform. Der Synthesizer 521 kann als ein harmonischer Frequenzvervielfacher und zur Ausgabe eines signal- und zeitsymmetrischen Rechtecksignals ausgebildet sein. Ferner umfasst der Synthesizer zwei selektive Begrenzer-Verstärker 801, 803, welche jeweils einen Bandpassfilter umfassen können, und das Flip-Flop 707.

Der selektive Begrenzer-Verstärker 801 kann ein elektrisches Signal mit der Frequenz $f_h$ empfangen, eine Mittenfrequenz $f_{mitte}$ = 7 $f_h$ aufweisen und ein elektrisches Signal mit der Frequenz $7f_h$ ausgeben. Ferner kann der selektive Begrenzer-Verstärker 803 eine Mittenfrequenz $f_{mitte}$ = 6*7 $f_h$ aufweisen und ein elektrisches Signal mit der Frequenz $42f_h$ ausgeben.

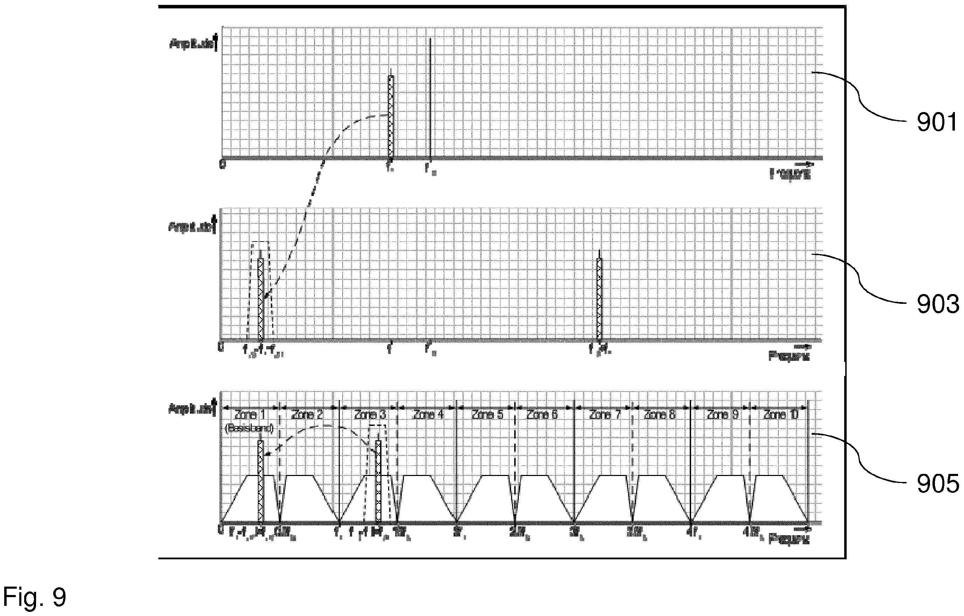

Gemäß einer Ausführungsform kann mittels eines harmonischen Frequenzvervielfachers ein effizientes Verfahren zur ganzzahligen Frequenzvervielfachung durchgeführt werden, speziell wenn nur eine feste Frequenz erzeugt wird. Hier kann von dem Umstand Gebrauch gemacht werden, dass in der pulsförmigen Hilfsfrequenz $f_h$ bei einem Tastverhältnis $\neq$ 50% spektral betrachtet häufig auch gerade und ungerade Vielfache der Grundfrequenz $f_h$ enthalten sein können. Dazu kann u.a. auch die LO Frequenz $f_{LO}$ gehören. Mittels selektiv abgestimmter Verstärkerstufen, wie den selektiven Begrenzer-Verstärkern 801, 803, kann diese Harmonische herausgelöst und weiter verarbeitet werden. Um die Anforderungen an die Selektivität der selektiven Begrenzer-Verstärker 801, 803 gering zu halten, kann in Etappen vervielfältigt werden. Eine Anwendung bezogen auf das hier dargestellte Beispiel zeigt Fig. 8. Die Vervielfältigungsfaktoren werden aufgespalten in: $f_h \cdot 6 \cdot 7 = f_h \cdot 42 = 2 \cdot f_{LO}$. Das Flip-Flop 707 kann auch hier unter Aufwendung eines Frequenz-Teilerfaktors von zwei für perfekt symmetrische Rechtecksignale mit der richtigen Lokaloszillatorfrequenz $f_{LO}$ sorgen. Fig. 9 zeigt eine spektrale qualitative Darstellung einer zweistufigen Frequenzumsetzung von einem Hochfrequenzbereich in einen Zwischenfrequenzbereich. Die Darstellung umfasst ein erstes schematisches Spektrum 901, ein zweites schematisches Spektrum 903 und ein drittes schematisches Spektrum 905.

Hierbei erfolgt die Frequenzumsetzung vom Hochfrequenzbereich in einen ersten Zwischenfrequenzbereich, wie im Übergang von dem ersten schematischen Spektrum 901 zu dem zweiten schematischen Spektrum 903 gezeigt, und anschließend eine Umsetzung von dem ersten Zwischenfrequenzbereich in einen zweiten Zwischenfrequenzbereich, wie in ein digitales Basisband, durch Unterabtastung. Dies ist im Übergang von dem zweiten schematischen Spektrum 903 zu dem dritten schematischen Spektrum 905 gezeigt. In der in der Fig. 9 gezeigten Darstellung weist das dritte schematische Spektrum 905 gegenüber dem ersten schematischen Spektrum 901 und dem zweiten schematischen Spektrum 903 eine abweichende Frequenzskalierung auf.

Gemäß einer Ausführungsform kann eine Effektivität des Positionssensors 100 durch Verwendung eines Unterabtastverfahrens weiter erhöht werden, bei dem die herunter gemischte ZF-Frequenz nicht direkt im digitalen Basisband erscheint. Der Synthesizer 521, wie ein separater Frequenzsynthesizer, kann, wie nachfolgend gezeigt wird, hierbei entfallen. Grundlage beim Unterabtastverfahren ist die bedingt durch die Abtastung sich generell ergebende Empfindlichkeit des Analog-Digital-Umsetzers 503 nicht nur im Basisband, das eine Frequenzzone von 0 bis $f_s/2$ aufspannt, sondern auch in nahtlos aneinandergereiht diskret wiederkehrenden höheren Frequenzzonen der Frequenzbreite $f_s/2$. Signalfrequenzen in diesen höheren Zonen stellten bei der zuvor angewendeten direkten Basisbandverarbeitung die sog. Alias-frequenzen dar, die zur Informationsverfälschung führen können, sofern sie nicht hinreichend unterdrückt werden. Wird unterabgetastet, so werden die Signale bewusst in eine höhere Frequenzzone gelegt woraus hochfrequente Signale trotz niederfrequenter Abtastfrequenz der digitalen Signalverarbeitung zugänglich gemacht werden können. Der Vorgang des Unterabtastens kann auch als Frequenzumsetzung interpretiert werden. Der Abtaster stellt in diesem Fall der Frequenzumsetzer 107, wie eine Mischstufe, dar. Mit der pulsförmigen Lokaloszillatorfrequenz, dargestellt durch die Abtastfrequenz $f_s$ kann eine Umsetzung gemäß: $f_{ZF2}=|f_s-f_{ZF1}|$ erfolgen, wobei $f_{ZF1}$ das unterabgetastete Signal und $f_{ZF2}$ das durch die Unterabtastung ins digitale Basisband umgesetzte Signal darstellt. Diese Gleichung kann gültig sein, sofern sich $f_{ZF1}$ in den Frequenzzonen zwei oder drei im dritten schematischen Spektrum 905 befindet. In höheren Frequenzzonen kann die den jeweiligen Zonen zugehörige n-fache Abtastfrequenz berücksichtigt werden. Da durch den ganzzahligen Faktor n bei harmonischen Vielfachen der Abtastfrequenz eine Umsetzung ins digitale Basisband erfolgt, spricht man bei der Unterabtastung auch von einer Harmonischen-Abtastung. Verdeutlicht werden die eben genannten Zusammenhänge der beteiligten Frequenzen und Umsetzprozesse in der Fig. 9: Während der Übergang von dem ersten schematischen Spektrum 901 nach dem zweiten schematischen Spektrum 903 den Umsetzprozess durch Mischung mit der Lokaloszillatorfrequenz darstellt, wobei die erste (analoge) Zwischenfrequenz $f_{ZF1}$ entsteht, wird im dritten schematischen Spektrum 905 bei veränderter Frequenzskalierung der Unterabtastprozess dargestellt indem $f_{ZF1}$ befindlich in Zone 3 und damit über der Abtastfrequenz liegend, durch Unterabtastung in das digitale Basisband überführt wird. Es gilt die Gleichung $f_{ZF2}=|f_s-f_{ZF1}|$. Die entstandene zweite Zwischenfrequenz $f_{ZF2}$ ist die für die weitere digitale Signalverarbeitung maßgebliche Frequenz an der sich die einzustellenden Parameter orientieren können. Da die zweite ZF zunächst in keinem Zusammenhang zur analog bereitgestellten ersten ZF steht, sondern ausschließlich von der Relation der Abtastfrequenz $f_s$ und der Lage von $f_{ZF1}$ bestimmt wird, kann $f_{ZF2}$ auch als interpretierte Frequenz von $f_{ZF1}$ bezeichnet werden. Damit das Unterabtastverfahren oder die Abtastung generell störungsfrei und ohne Informationsverfremdung angewendet werden kann, können einige Voraussetzungen erfüllt werden:

- Es kann das allgemeine Abtasttheorem nach Nyquist eingehalten werden, das, übertragen auf diese Anwendung besagt: $f_s > 2 \cdot Bf_{ZF1}$, wobei $Bf_{ZF1}$ die Bandbreite von $f_{ZF1}$ darstellt.

- Keine Aussage, obgleich ein entscheidender Aspekt, trifft das Abtasttheorem bzgl. der Lage der ersten ZF Frequenz im Spektrum. Hier gilt, dass das ZF Signal möglichst mittig, wie zentriert, innerhalb einer Frequenzzone des dritten schematischen Spektrums 905 angeordnet sein kann. Eine Überschneidung von $f_{ZF1}$ mit Seitenfrequenzen über die Zonengrenzen hinaus ist nicht gestattet und würde trotz eingehaltener Bandbreitenbedingung $f_s > 2 \cdot Bf_{ZF1}$ zur Informationsverfälschung führen.

Die in der Fig. 9 im dritten schematischen Spektrum 905 ebenfalls abgebildeten weißen unsymmetrischen Trapeze innerhalb der Unterabtastzonen sollen zum einen die korrekte Lage eines breitbandigen Signals ohne Überschreitung der Zonengrenzen symbolisieren. Andererseits lässt sich bei unterabgetasteten Signalen, die in einer hier geradzahligen Frequenzzone liegen, eine mit der Unterabtastung einhergehende Frequenzinversion mit der Umsetzung in das Basisband erkennen. Der Effekt der Frequenzinversion kann für den hier behandelten Positionssensor 100 oder einen Weg/Winkelsensor ohne Bedeutung sein, da das AM modulierte ZF Signal spektral gesehen stets symmetrisch ist. Der Theorie entsprechend gibt es bei idealer Abtastung keine Begrenzung hinsichtlich des Grades der Unterabtastung nach höheren Frequenzen hin. Ferner kann eine direkte Unterabtastung des sich in HF Lage befindlichen Zweiseitenband-AM mittels des ersten elektrischen Signals oder eines Trägersignals durchgeführt werden. Eine zuvor durchgeführte Frequenzumsetzung, wie die Umsetzung von dem ersten schematischen Spektrum 901 in das zweite schematische Spektrum 903 kann dann entfallen. Das Signal in HF-Lage kann direkt mittels Unterabtastung ins digitale Basisband umgesetzt werden. Häufig sind jedoch bei der Anwendung des Unterabtastverfahrens zahlreiche Einschränkungen zu berücksichtigen:

- Der analoge Teil des Abtasters und Analog-Digital-Umsetzers 503 kann ausgebildet sein, die bei Unterabtastung teils deutlich höheren Eingangsfrequenzen fehlerfrei zu verarbeiten. Häufig ist das bei nicht explizit für Unterabtastung ausgewiesenen Analog-Digital-Umsetzern nicht erfüllt.
- Jitter des Abtasttakts kann zu einer Verringerung der effektiven Auflösung des Analog-Digital-Umsetzers 503 führen. Diese kann bei der Anwendung der Unterabtastung besonders berücksichtigt werden, denn hier wird das Nachrichtensignal mit einer vielfachen Harmonischen des Abtasttakts verarbeitet, die ihrerseits auch ein Vielfaches des ursprünglichen Jitters aufweisen kann. Als Folge kann damit eine empfindliche Verringerung der effektiven Auflösung einhergehen oder anders ausgedrückt der Dynamikbereich eingeschränkt werden.
- Zur störungsfreien Verwendung des Unterabtastverfahrens kann, wie oben bereits aufgeführt, eine Beschränkung des Nachrichtensignals auf eine Unterabtastzone durchgeführt werden. Mit steigendem Unterabtastfaktor, wie bei einer höheren Unterabtastzone als im dritten schematischen Spektrum 905, kann ein Alias-Bandfilter ineffizienter und kostenintensiver als ein vergleichbarer Analogfilter sein. Denn unabhängig von dem Grad der Unterabtastung beträgt die Breite des Zonenbereichs stets $f_s/2$.

Bedingt durch die oben geschilderten Einschränkungen kann vorzugsweise ein Unterabtastfaktor von 1 bis 2 gewählt werden, wodurch das abzutastende Signal üblicherweise in der Frequenzzone 2 bis 3 in dem dritten schematischen Spektrum 905 in der Fig. 9 erscheint.

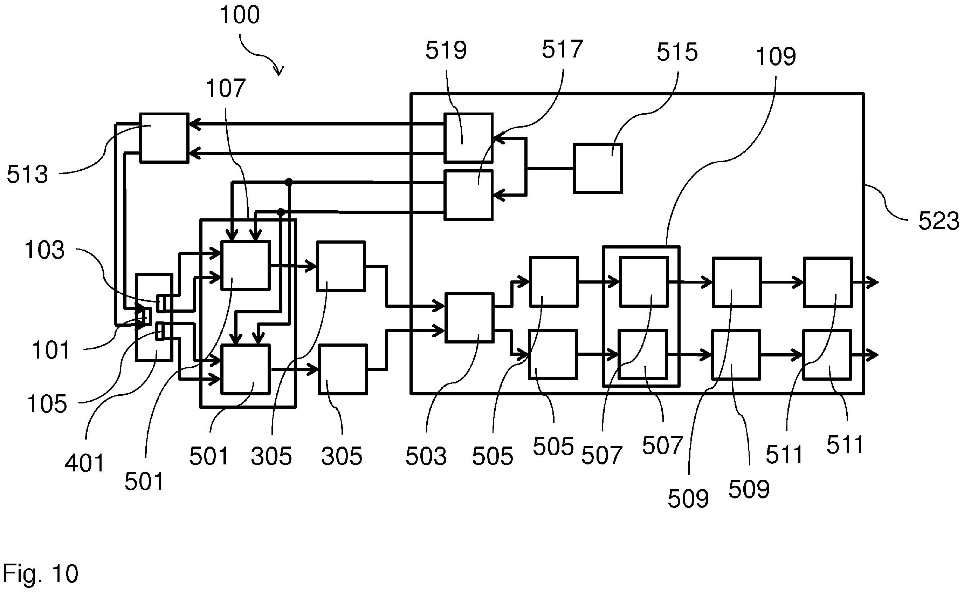

Fig. 10 zeigt eine schematische Darstellung des Positionssensors 100 gemäß einer weiteren Ausführungsform. Die in der Fig. 10 gezeigte Ausführungsform des Positionssensors 100 unterscheidet sich von der in der Fig. 5 gezeigten Ausführungsform des Positionssensors 100 lediglich durch ein Entfallen des Synthesizers 521. Ferner kann der Timer 517 zur Ausgabe des zweiten elektrischen Signals, beispielsweise mit der Frequenz $f_{LO}$, ausgebildet sein.

Ferner illustriert die Fig. 10 die Funktionsgruppen des Positionssensors 100, wie eines induktiven Positionssensors, dessen Analog-Digital-Umsetzer 503 hier die erste ZF, wie das AM Signal auf ZF- Ebene, unterabgetastet digital weiterverarbeiten kann. Er orientiert sich in der Funktionsweise grundsätzlich an der Blockdarstellung des in Fig.

5 dargestellten Prinzips.

Ferner zeigt die Fig. 10 eine Blockdarstellung des Positionssensors 100, wie eines Hochfrequenz-Positionssensors, mit Frequenzumsetzung und anschließender digitaler Signaldemodulation. Durch Unterabtastung kann eine sehr einfache Erzeugung von Träger- und LO-Frequenz erreicht werden.

Gemäß einer Ausführungsform können sämtliche externe Frequenzen von den in dem Mikrokontroller 523 integrierten Timern 517, 519 erzeugt werden.

Gemäß einer weiteren Ausführungsform können bezüglich der erzeugten Träger- und Lokaloszillatorfrequenzen und deren Bezug zu weiteren internen Frequenzen durch den hier gleichermaßen eingesetzten Goerzel-Algorithmus als AM-Demodulator zur Vermeidung von Fehlern ähnlich anspruchsvolle Anforderungen gestellt werden, wie sie obig aufgezeigt wurden. Beispielhafte Anforderungen für die Frequenzaufbereitung bei Unterabtastung sind gegeben durch:

- Trägerfrequenzbereich: $1,5\text{MHz} < f_T < 6\text{MHz}$.
- ZF Bereich, wie Lage der ersten ZF $f_{ZF1}$: $f_{ZF1} < 200\text{kHz}$, vorzugsweise: $f_{ZF1} < 100\text{kHz}$.
- Sämtliche am Signalverarbeitungsprozess beteiligten Frequenzen können von einer zentralen Zeitbasis abgeleitet werdenn. Die starre Frequenzverkoppelung lässt das Goertzelfilter 507 auch hier wieder als ZF-synchron mitlaufendes Filter wirken.
- Haupttaktfrequenz des Mutteroszillators 515: $f_{mc} = 24\text{MHz}$.

Gemäß einer weiteren Ausführungsform kann es darüber hinaus weitere oder angepasste Anforderungen geben, die speziell bei der Verwendung des Unterabtastverfahrens für einen störungsfreien Betrieb sorgen:

- Ähnlich wie obig beschrieben kann die Abtastfrequenz $f_s$ ein ganzzahliges Vielfaches der ZF Frequenz, hier im Speziellen der zweiten ZF $f_{ZF2}$ oder interpretierten Frequenz darstellen. Da beim Unterabtastverfahren die maßgebliche Frequenz für die digitale Signalverarbeitung an der sich die einzustellenden Parameter orientieren können $f_{ZF2}$ ist, sorgt auch hier die korrekte Dimensionierung dafür, dass der in die zweite ZF Lage umgesetzte Träger stets mit der Mittenfrequenz des Durchlassbereichs des Goertzelfilters 507 zusammenfallen kann.
- Eine weitere Anforderung kann durch die so genannte Zonensymmetrie (ZS) gegeben sein. Wie oben bereits angedeutet wurde, kann nach Möglichkeit die erste ZF Frequenz $f_{ZF1}$ mittig in eine Unterabtastzone umgesetzt werden, wie in dem dritten schematischen Spektrum 905 gezeigt. Eine mittige Lage, bzw. der sich daraus ergebende symmetrische Abstand zu den verbotenen Nebenzonen, wie Alias-Frequenzen, kann eine maximal mögliche Bandbreite für das den ZF Träger modulierende Nachrichtensignal entsprechend der Frequenz der Sinus- oder Kosinuseinhüllenden bedeuten. Darüber hinaus erlaubt eine mittige Lage von $f_{ZF1}$ innerhalb der Unterabtastzone eine einfachere und damit preiswertere Gestaltung des analogen $f_{ZF1}$ Anti-Aliasing Bandpassfilters, das weniger selektiv sein kann, als wenn sich $f_{ZF1}$ nahe der Zonengrenze befinden würde. Die Zonensymmetrie kann numerisch angegeben werden und ist damit vordefinierbar, indem der Quotient aus Abtastfrequenz $f_s$ und der zweiten ZF Frequenz $f_{ZF2}$, wie eine interpretierte Frequenz gebildet wird. Es kann gelten: $$ZS = \frac{f_s}{f_{ZF2}}, \quad ZS \in \mathbb{N}.$$ In der nachfolgenden Dimensionierung der beteiligten Frequenzen kann ZS die Werte 3, 4 oder 5 annehmen. Beispielsweise stellt ZS= 4 ein Optimum mit zonenmittiger Lage von $f_{ZF1}$ dar, während ZS= 3 oder ZS= 5 die erste ZF mit leichtem Mittenversatz innerhalb des Zonenbereichs identifiziert. Diese Werte können zugelassen werden, um bei der nachfolgenden Suche passender Frequenzkombinationen die Anzahl brauchbarer Ergebnisse nicht zu klein werden zu lassen.

Gemäß einer weiteren Ausführungsform kann die Dimensionierung des Hochfrequenz- Positionssensors auf der Grundlage erfolgen, dass sowohl die erste Frequenz oder Trägerfrequenz $f_T$ zur Primäransteuerung als auch die zweite Frequentz oder Überlagerungsfrequenz $f_{LO}$ des Lokaloszillators mit den internen Timern 517, 519 des Mikrokontrollers 523 erzeugt werden. Zur Prüfung, ob diese Annahme sinnvoll ist, können mittels eines systematischen Suchschemas auf Basis der oben gestellten Anforderungen, alle infrage kommenden Frequenzkombinationen abgefragt werden. Hierbei kann eine optimale $f_{ZF1} \leftrightarrow f_s$ Kombinationen ermittelt werden. Um hier die Anzahl der möglichen Lösungen nicht unnötig einzuschränken, können alle spezifisch einstellbaren Abtastfrequenzen $f_s$ des eingesetzten Analog-Digital-Umsetzers zugelassen werden.

Beispielsweise werden die Parameter wie folgt gewählt, um einen effizienten Betrieb des Positionssensors 100 zu ermöglichen:

- Trägerfrequenz $f_T = 1, 5\text{MHz} = f_{mc}/16$; Lokaloszillatorfrequenz $f_{LO} \approx 1,412\text{MHz}$;

- Erste ZF-Frequenz: $f_{ZF1} \approx 88,2353\text{kHz}$;

- Abtastfrequenz $f_{ZF1} \approx$ 117,647kHz;

- $f_{ZF2} \approx$ 29,411kHz; und

- Zonensymmetrie ZS= 4.

**Bezugzeichenliste**

| | |
|---|---|
| 100 | Positionssensor |
| 101 | Primärspule |
| 103 | Erste Sekundärspule |
| 105 | Zweite Sekundärspule |
| 107 | Frequenzumsetzer |
| 109 | Goertzelfilterbank |

| | |
|---|---|
| 201 | Eingangssignal |
| 203 | Ausgangssignal |

| | |
|---|---|
| 301 | Trägeroszillator |
| 303 | Lokaloszillator |
| 305 | Selektiver Zwischenfrequenzverstärker |

| | |
|---|---|
| 401 | Platine |
| 403 | Positionsgeber |
| 405 | Spule |
| 407 | Kondensator |

| | |
|---|---|
| 501 | Mischer |
| 503 | Analog-Digital-Umsetzer |
| 505 | Einrichtung zur Signalfensterung |
| 507 | Goertzelfilter |
| 509 | Einrichtung zur Linearisierung |
| 511 | Signalausgang |
| 513 | Verstärker |
| 515 | Mutteroszillator |
| 517 | Timer |
| 519 | Timer |
| 521 | Synthesizer |
| 523 | Mikrokontroller |
| 701 | Phasendetektor |
| 703 | Schleifenfilter |
| 705 | Spannungsgesteuerter Oszillator |
| 707 | Flip-Flop |
| 709 | Frequenzteiler |

| | |
|---|---|
| 801 | Selektiver Begrenzer-Verstärker |
| 803 | Selektiver Begrenzer-Verstärker |

| | |
|---|---|
| 901 | Erstes schematisches Spektrum |
| 903 | Zweites schematisches Spektrum |
| 905 | Drittes schematisches Spektrum |

**Patentansprüche**

**1.** Positionssensor (100) zum Erfassen einer Position eines Positionsgebers (403), mit einer ersten elektrischen Signalquelle zum Ausgeben eines ersten elektrischen Signals mit einer ersten Frequenz und einer zweiten elektrischen Signalquelle zum Ausgeben eines zweiten elektrischen Signals mit einer zweiten Frequenz, mit:

einem Frequenzgenerator zum Erzeugen eines weiteren elektrischen Signals mit einer dritten Frequenz, wobei die erste elektrische Signalquelle ausgebildet ist, das erste elektrische Signal auf der Basis des weiteren elektrischen Signals zu erzeugen, und wobei die zweite elektrische Signalquelle ausgebildet ist, das zweite elektrische Signal auf der Basis des weiteren elektrischen Signals zu erzeugen, wobei der Frequenzgenerator einen Mutteroszillator eines Mikrokontrollers (523) umfasst,
einer Primärspule (101) zum Erzeugen eines magnetischen Wechselfeldes mit der ersten Frequenz;
einer ersten Sekundärspule (103) und einer zweiten Sekundärspule (105), wobei die erste Sekundärspule (103) und die zweite Sekundärspule (105) jeweils durch den Positionsgeber (403) mit der Primärspule (101) magnetisch koppelbar sind, und wobei durch das erzeugte magnetische Wechselfeld ein drittes elektrisches Signal in der ersten Sekundärspule (103) und ein viertes elektrisches Signal in der zweiten Sekundärspule (105) induzierbar ist;
einem Frequenzumsetzer (107) zum Umsetzen des dritten elektrischen Signals auf ein erstes Zwischenfrequenzsignal und zum Umsetzen des vierten elektrischen Signals auf ein zweites Zwischenfrequenzsignal, wobei der Frequenzumsetzer (107) mit der zweiten elektrischen Signalquelle verbunden ist; und
einer Goertzelfilterbank (109) zur Demodulation des ersten Zwischenfrequenzsignals, um ein erstes demoduliertes Signal zu erhalten, und zur Demodulation des zweiten Zwischenfrequenzsignals, um ein zweites demoduliertes Signal zu erhalten.

2. Positionssensor (100) nach Anspruch 1, mit einem Prozessor zum Bestimmen der Position des Positionsgebers (403) in Abhängigkeit von dem ersten demodulierten Signal oder von dem zweiten demodulierten Signal.

3. Positionssensor (100) nach Anspruch 1 oder 2, wobei der Goertzelfilterbank (109) ein Analog-Digital-Umsetzer (503) vorgeschaltet ist.

4. Positionssensor (100) nach einem der vorangehenden Ansprüche, wobei der Goertzelfilterbank (109) eine Einrichtung (505) zur Signalfensterung vorgeschaltet ist.

5. Positionssensor (100) nach einem der vorangehenden Ansprüche, wobei die Goertzelfilterbank (109) einen ersten Goertzelfilter (507) zur Demodulation des ersten Zwischenfrequenzsignals und einen zweiten Goertzelfilter (507) zur Demodulation des zweiten Zwischenfrequenzsignals umfasst.

6. Positionssensor (100) nach einem der vorangehenden Ansprüche, mit einem Signalausgang (511) zur Ausgabe des ersten demodulierten Signals oder des zweiten demodulierten Signals.

7. Positionssensor (100) nach einem der vorangehenden Ansprüche, wobei der Goertzelfilterbank (109) eine Einrichtung (509) zur Linearisierung des ersten demodulierten Signals oder des zweiten demodulierten Signals nachgeschaltet ist.

8. Positionssensor (100) nach einem der vorangehenden Ansprüche, wobei dem Frequenzumsetzer (107) ein Bandpassfilter nachgeschaltet ist.

9. Positionssensor (100) nach einem der vorangehenden Ansprüche, wobei dem Frequenzumsetzer (107) ein Verstärker nachgeschaltet ist.

10. Positionssensor (100) nach einem der vorangehenden Ansprüche, wobei der Frequenzumsetzer (107) einen ersten Mischer (501) zum Mischen des dritten elektrischen Signals mit dem zweiten elektrischen Signal und einen zweiten Mischer (501) zum Mischen des vierten elektrischen Signals mit dem zweiten elektrischen Signal umfasst.

11. Positionssensor (100) nach Anspruch 1, wobei der ersten elektrischen Signalquelle oder der zweiten elektrischen Signalquelle ein Verstärker nachgeschaltet ist.

12. Positionssensor (100) nach einem der vorangehenden Ansprüche, wobei die erste Frequenz oder die zweite Frequenz ein ganzzahliges Vielfaches der dritten Frequenz ist, oder wobei die dritte Frequenz ein ganzzahliges Vielfaches der ersten Frequenz oder der zweiten Frequenz ist.

13. Positionssensor (100) nach einem der vorangehenden Ansprüche, wobei die erste elektrische Signalquelle einen Synthesizer (521) zum Erzeugen des ersten elektrischen Signals mit der ersten Frequenz auf der Basis des weiteren elektrischen Signals umfasst, oder wobei die zweite elektrische Signalquelle einen Synthesizer (521) zum Erzeugen des zweiten elektrischen Signals mit der zweiten Frequenz auf der Basis des weiteren elektrischen Signals umfasst.

**Claims**

1. Position sensor (100) for detecting a position of a position transmitter (403), having a first electric signal source in order to output a first electric signal with a first frequency and having a second electric signal source in order to output a second electric signal with a second frequency, comprising:

   a frequency generator for generating a further electric signal with a third frequency, wherein the first electric signal source is embodied to generate the first electric signal on the basis of the further electric signal, and wherein the second electric signal source is embodied to generate the second electric signal on the basis of the further electric signal, wherein the frequency generator comprises a master oscillator of a microcontroller (523)
   a primary coil (101) for generating an alternating magnetic field with the first frequency;
   a first secondary coil (103) and a second secondary coil (105), wherein the first secondary coil (103) and the second secondary coil (105) can each be magnetically coupled to the primary coil (101) by means of the position transmitter (403), and wherein a third electric signal can be induced in the first secondary coil (103) and a fourth electric signal can be induced in the second secondary coil (105) by the generated alternating magnetic field;
   a frequency converter (107) for converting the third electric signal into a first intermediate frequency signal and for converting the fourth electric signal into a second intermediate frequency signal, wherein the frequency converter (107) is connected to the second electric signal source; and
   a Goertzel filter bank (109) for the demodulation of the first intermediate frequency signal in order to obtain a first demodulated signal, and for the demodulation of the second intermediate frequency signal in order to obtain a second demodulated signal.

2. Position sensor (100) according to Claim 1, comprising a processor for determining the position of the position transmitter (403) as a function of the first demodulated signal or of the second demodulated signal.

3. Position sensor (100) according to Claim 1 or 2, wherein an analog-digital converter (503) is connected upstream of the Goertzel filter bank (109).

4. Position sensor (100) according to one of the preceding claims, wherein a device (505) for signal windowing is connected upstream of the Goertzel filter bank (109).

5. Position sensor (100) according to one of the preceding claims, wherein the Goertzel filter bank (109) comprises a first Goertzel filter (507) for the demodulation of the first intermediate frequency signal and a second Goertzel filter (507) for the demodulation of the second intermediate frequency signal.

6. Position sensor (100) according to one of the preceding claims, comprising a signal output (511) for outputting the first demodulated signal or the second demodulated signal.

7. Position sensor (100) according to one of the preceding claims, wherein a device (509) for linearizing the first demodulated signal or the second demodulated signal is connected downstream from the Goertzel filter bank (109).

8. Position sensor (100) according to one of the preceding claims, wherein a bandpass filter is connected downstream from the frequency converter (107).

9. Position sensor (100) according to one of the preceding claims, wherein an amplifier is connected downstream from the frequency converter (107).

10. Position sensor (100) according to one of the preceding claims, wherein the frequency converter (107) comprises a first mixer (501) for mixing the third electric signal with the second electric signal, and a second mixer (501) for mixing the fourth electric signal with the second electric signal.

**11.** Position sensor (100) according to Claim 1, wherein an amplifier is connected downstream from the first electric signal source or the second electric signal source.

**12.** Position sensor (100) according to one of the preceding claims, wherein the first frequency or the second frequency is an integral multiple of the third frequency, or wherein the third frequency is an integral multiple of the first frequency or of the second frequency.

**13.** Position sensor (100) according to one of the preceding claims, wherein the first electric signal source comprises a synthesizer (521) for generating the first electric signal with the first frequency on the basis of the further electric signal, or wherein the second electric signal source comprises a synthesizer (521) for generating the second electric signal with the second frequency on the basis of the further electric signal.

**Revendications**

**1.** Détecteur de position (100) destiné à détecter une position d'un transmetteur de position (403), comprenant une première source de signal électrique destinée à délivrer un premier signal électrique ayant une première fréquence et une deuxième source de signal électrique destinée à délivrer un deuxième signal électrique ayant une deuxième fréquence, comprenant :

un générateur de fréquence destiné à générer un signal électrique supplémentaire ayant une troisième fréquence, la première source de signal électrique étant configurée pour générer le premier signal électrique sur la base du signal électrique supplémentaire et la deuxième source de signal électrique étant configurée pour générer le deuxième signal électrique sur la base du signal électrique supplémentaire, le générateur de fréquence comportant un oscillateur mère d'un microcontrôleur (523), une bobine primaire (101) destinée à générer un champ alternatif magnétique ayant la première fréquence ;
une première bobine secondaire (103) et une deuxième bobine secondaire (105), la première bobine secondaire (103) et la deuxième bobine secondaire (105) pouvant respectivement être couplées magnétiquement avec la bobine primaire (101) par le transmetteur de position (403), et un troisième signal électrique pouvant être induit dans la première bobine secondaire (103) et un quatrième signal électrique dans la deuxième bobine secondaire (105) par le champ alternatif magnétique généré ;
un convertisseur de fréquence (107) destiné à convertir le troisième signal électrique à un premier signal de fréquence intermédiaire et à convertir le quatrième signal électrique à un deuxième signal de fréquence intermédiaire, le convertisseur de fréquence (107) étant relié à la deuxième source de signal électrique ; et
un banc de filtres de Goertzel (109) destiné à la démodulation du premier signal de fréquence intermédiaire afin d'obtenir un premier signal démodulé, et destiné à la démodulation du deuxième signal de fréquence intermédiaire afin d'obtenir un deuxième signal démodulé.

**2.** Détecteur de position (100) selon la revendication 1, comprenant un processeur destiné à déterminer la position du transmetteur de position (403) en fonction du premier signal démodulé ou du deuxième signal démodulé.

**3.** Détecteur de position (100) selon la revendication 1 ou 2, un convertisseur analogique/numérique (503) étant branché en amont du banc de filtres de Goertzel (109).

**4.** Détecteur de position (100) selon l'une des revendications précédentes, un dispositif (505) de fenêtrage de signal étant branché en amont du banc de filtres de Goertzel (109).

**5.** Détecteur de position (100) selon l'une des revendications précédentes, le banc de filtres de Goertzel (109) comportant un premier filtre de Goertzel (507) destiné à la démodulation du premier signal de fréquence intermédiaire et un deuxième filtre de Goertzel (507) destiné à la démodulation du deuxième signal de fréquence intermédiaire.

**6.** Détecteur de position (100) selon l'une des revendications précédentes, comprenant une sortie de signal (511) destinée à délivrer le premier signal démodulé ou le deuxième signal démodulé.

**7.** Détecteur de position (100) selon l'une des revendications précédentes, un dispositif (509) destiné à la linéarisation du premier signal démodulé ou du deuxième signal démodulé étant branché en aval du banc de filtres de Goertzel (109).

**8.** Détecteur de position (100) selon l'une des revendications précédentes, un filtre passe-bande étant branché en aval du convertisseur de fréquence (107).

**9.** Détecteur de position (100) selon l'une des revendications précédentes, un amplificateur étant branché en aval du convertisseur de fréquence (107).

**10.** Détecteur de position (100) selon l'une des revendications précédentes, le convertisseur de fréquence (107) comportant un premier mélangeur (501) destiné à mélanger le troisième signal électrique avec le deuxième signal électrique et un deuxième mélangeur (501) destiné à mélanger le quatrième signal électrique avec le deuxième signal électrique.

**11.** Détecteur de position (100) selon la revendication 1, un amplificateur étant branché en aval de la première source de signal électrique ou de la deuxième source de signal électrique.

**12.** Détecteur de position (100) selon l'une des revendications précédentes, la première fréquence ou la deuxième fréquence étant un multiple entier de la troisième fréquence, ou la troisième fréquence étant un multiple entier de la première fréquence ou de la deuxième fréquence.

**13.** Détecteur de position (100) selon l'une des revendications précédentes, la première source de signal électrique comportant un synthétiseur (521) destiné à générer le premier signal électrique ayant la première fréquence sur la base du signal électrique supplémentaire, ou la deuxième source de signal électrique comportant un synthétiseur (521) destiné à générer le deuxième signal électrique ayant la deuxième fréquence sur la base du signal électrique supplémentaire.

Fig. 1

EP 3 198 234 B1

Fig. 2

EP 3 198 234 B1

Fig. 3

EP 3 198 234 B1

Fig. 4

Fig. 5

EP 3 198 234 B1

Fig. 6

EP 3 198 234 B1

701    703    705    707

709

521

Fig. 7

EP 3 198 234 B1

801   803   707

521

Fig. 8

Fig. 9

Fig. 10

EP 3 198 234 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012215940 A1